(19) **Europäisches Patentamt European Patent Office Office européen des brevets**

(11) **EP 4 413 356 B1**

(12) **FASCICULE DE BREVET EUROPEEN**

(45) Date de publication et mention de la délivrance du brevet:
**25.02.2026 Bulletin 2026/09**

(21) Numéro de dépôt: **22817297.9**

(22) Date de dépôt: **06.10.2022**

(51) Classification Internationale des Brevets (IPC):
**G01N 21/90** *(2006.01)*

(52) Classification Coopérative des Brevets (CPC):
**G01N 21/90; G01N 21/9045;** G01N 2021/8848

(86) Numéro de dépôt international:
**PCT/FR2022/051893**

(87) Numéro de publication internationale:
**WO 2023/057726 (13.04.2023 Gazette 2023/15)**

(54) **DISPOSITIF ET PROCEDE OPTO-INFORMATIQUE D'ANALYSE EN LUMIERE TRAVERSANTE D'UN RECIPIENT EN MATERIAU TRANSPARENT OU TRANSLUCIDE A L'AIDE D'UNE CAMERA NUMERIQUE POLARIMETRIQUE**

OPTISCHE BERECHNUNGSVORRICHTUNG UND VERFAHREN ZUR ANALYSE VON LICHT, DAS DURCH EINEN BEHÄLTER AUS TRANSPARENTEM ODER DURCHSCHEINENDEM MATERIAL FLIESST, MITHILFE EINER DIGITALEN POLARIMETRISCHEN KAMERA

OPTICAL-COMPUTING DEVICE AND METHOD FOR ANALYSING LIGHT PASSING THROUGH A CONTAINER MADE OF TRANSPARENT OR TRANSLUCENT MATERIAL BY MEANS OF A DIGITAL POLARIMETRIC CAMERA

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.10.2021 FR 2110694**

(43) Date de publication de la demande:
**14.08.2024 Bulletin 2024/33**

(73) Titulaire: **TIAMA**
**69230 Saint-Genis-Laval (FR)**

(72) Inventeurs:
- **DRUETTO, Raphael**
  **69600 OULLINS (FR)**
- **LECONTE, Marc**
  **69700 LOIRE SUR RHONE (FR)**
- **PENSEC, Yann**
  **69630 CHAPONOST (FR)**

(74) Mandataire: **Cabinet Beau de Loménie**
**51 avenue Jean Jaurès**
**BP 7073**
**69301 Lyon Cedex 07 (FR)**

(56) Documents cités:
**DE-A1- 102019 205 654    DE-A1- 102019 208 296**

**Description**

Domaine Technique

L'invention concerne un procédé opto-informatique d'analyse en lumière traversante d'un récipient en verre à l'aide d'une caméra numérique polarimétrique, notamment en vue de détecter informatiquement la présence, dans le matériau constitutif du récipient, à savoir un matériau transparent ou translucide, d'éventuels défauts, en vue de pouvoir identifier un caractère rédhibitoire ou pas de tels défauts.

Par matériau transparent ou translucide, l'on désigne dans toute la suite de la description le verre blanc notamment le verre blanc ou coloré, ou des matières plastiques ou polymères de toute origine, par exemple le Polyéthylène phtéralate (PET) ou le Polyéthylène haute densité (HDPE).

Technique antérieure

Il existe une grande quantité de procédés opto-informatiques d'analyse d'un récipient en verre pour y détecter des défauts, faisant appel à une ou plusieurs caméras numériques, dans lesquels la détection et l'éventuelle identification ou classification des défauts est réalisée par analyse informatique d'une ou plusieurs images numériques acquises par ces caméras. Certains procédés acquièrent une image numérique en lumière réfléchie sur le récipient. D'autres procédés, comme ceux envisagés dans l'invention, travaillent en lumière traversante, la source lumineuse étant dans ce cas dans le champ de vision de la caméra numérique utilisée. Dans les procédés les plus classiques, les éventuels défauts sont détectés informatiquement dans une ou plusieurs images numériques d'intensité acquises par une caméra, dans lesquelles les anomalies dans l'image résultent de l'absorption ou de la réfraction totale ou partielle, par le défaut, de la lumière incidente projetée par la source lumineuse. L'image numérique utilisée pour une telle analyse est donc une image numérique d'intensité dont chacun des pixels présente une valeur proportionnelle à l'intensité lumineuse émise par un point du récipient correspondant optiquement à ce pixel dans le système optique de la caméra. Une telle détection dans une image numérique d'intensité permet généralement d'identifier la localisation des défauts sur le récipient et éventuellement d'en identifier la taille et la forme, à la condition cependant que le défaut induise une anomalie d'absorption ou de réfraction de la lumière par rapport au matériau du récipient qui entoure ce défaut.

Parmi les procédés opto-informatiques qui travaillent en lumière traversante, on connaît aussi les procédés qui déterminent la présence de contraintes mécaniques résiduelles dans le matériau (parfois appelées contraintes mécaniques internes ou, notamment en langue anglaise, « stress »), en déterminant la modification de l'état de polarisation de la lumière après que celle-ci a traversé le matériau du récipient et a traversé d'éventuels défauts de stress de celui-ci. Pour mettre en œuvre de tels procédés, on dispose aujourd'hui de caméras polarimétriques.

On connaît notamment des caméras polarimétriques dans lesquelles la caméra polarimétrique comporte un capteur photoélectrique bidimensionnel comprenant des éléments photoélectriques comprenant chacun une cellule photoélectrique devant laquelle est agencé un système d'analyse de polarisation qui sera ci-après dénommé analyseur de polarisation ou tout simplement analyseur. Le système d'analyse de polarisation comprend un filtre polarisant linéaire, ci-après dénommé analyseur linéaire individuel de polarisation ou tout simplement analyseur individuel linéaire, associé à chaque cellule photoélectrique de cet élément photoélectrique. Le capteur photoélectrique comporte un nombre N de groupes distincts d'éléments photoélectriques contigus, chaque groupe distinct d'éléments photoélectriques contigus comprenant quatre éléments photoélectriques contigus appartenant respectivement à quatre familles distinctes d'éléments photoélectriques. Chaque famille d'éléments photoélectriques est définie par l'orientation de l'axe de polarisation de son analyseur individuel linéaire, cette orientation de l'axe de polarisation de l'analyseur individuel linéaire étant commune à chacun des éléments photoélectriques de la famille considérée. Dans les caméras polarimétriques connues, les quatre analyses linéaires correspondent donc à quatre orientations de leur axe de polarisation respectif, et correspondent à deux paires d'axes de polarisation orthogonaux, les deux paires étant décalées l'une de l'autre de 45 degrés d'angle, dans un sens ou dans l'autre.

Par exemple, les caméras polarimétriques de la série XCG-CP commercialisées par les sociétés du groupe SONY fonctionnent selon ce principe. Les mêmes sociétés du groupe SONY commercialisent des capteurs photoélectriques bidimensionnels qui intègrent un système de filtres polarisant linéaires individuels associés chacun à une cellule photoélectrique selon le principe ci-dessus. Ces capteurs, connus sous les références IMX250MZR / MYR, IMX253MAR / MYR, ou encore IMX264MZR / MYR, de technologie CMOS, comportent des filtre polarisants linéaires individuels formés directement sur le composant. L'invention sera décrite ci-après de manière plus précise dans un mode de réalisation mettant en œuvre une telle caméra. D'autres constructeurs de caméras pouvant être mises en œuvre dans le cas de l'invention incluent la société Lucid Vision Labs, Inc, 130-13200 Delf Place, Richmond B.C., Canada, V6V 2A2. Des capteurs polarimétriques sont aussi décrits dans le document EP-2.275.790. Un dispositif et un procédé opto-informatique d'analyse en lumière traversante d'un récipient en verre à l'aide d'une caméra numérique polarimétrique sont aussi décrits dans le document WO-2020/212014.

Sur la base des images numériques de polarisation acquises avec de telles caméras polarimétriques, il est possible de repérer, dans un récipient analysé, des régions dites « régions stressées » dans lesquelles le matériau de verre constitutif du récipient présente des contraintes mécaniques résiduelles qui se traduisent par un déphasage des deux composantes orthogonales d'une lumière polarisée traversant ces régions stressées, c'est-à-dire d'un déphasage entre deux composantes orthogonales du champ électrique de la lumière. Ces contraintes mécaniques résiduelles, généralement d'origine thermique, peuvent résulter de la présence d'une inclusion dans le matériau (céramique, métal, verre dévitrifié, ...) ou résulter du processus de formation du récipient, telles que les gradients thermiques créés durant le formage et mal résorbés dans l'arche de recuisson lors du processus de refroidissement du verre. Dans tous les cas, il est connu que de telles zones stressées peuvent être des zones de fragilité inacceptables, rendant le récipient impropre à son utilisation dans le commerce.

Dans une « région stressée », le matériau présentant des contraintes mécaniques résiduelles devient biréfringent, l'indice de réfraction du matériau étant alors différent selon deux axes orthogonaux dits rapide et lent, orientés en fonction de la direction des contraintes mécaniques résiduelles. Lorsqu'une onde électromagnétique traverse une « région stressée », une première composante du champ électrique de l'onde se propage plus rapidement que l'autre composante de ce champ électrique, orthogonale à la première, du fait de la biréfringence du matériau présentant des contraintes mécaniques résiduelles, créant ainsi un déphasage $\varphi$ entre ces deux composantes, le déphasage $\varphi$ étant induit par les contraintes mécaniques résiduelles. Il faut noter que le déphasage $\varphi$ induit par les contraintes mécaniques résiduelles se superpose ou se retranche à un éventuel déphasage incident de la lumière incidente.

Dans les techniques habituellement mises en œuvre, on peut distinguer celles qui mettent en œuvre une lumière incidente polarisée linéairement, selon une direction de polarisation linéaire incidente, de celles qui mettent en œuvre une lumière polarisée circulairement avec un sens de rotation incident.

En conséquence, dans une méthode de détection de contraintes mécaniques résiduelles consistant à illuminer le récipient avec une lumière incidente polarisée linéairement, la polarisation de la lumière incidente est modifiée, pendant la traversée de matériaux de verre présentant des contraintes mécaniques résiduelles, en une polarisation résultante de la lumière émergente qui émane du matériau, ci-après polarisation émergente, cette modification de la polarisation étant dépendante de la valeur des contraintes mécaniques résiduelles et de l'angle entre la direction des contraintes mécaniques résiduelles et la direction de polarisation linaire incidente comme suit :

- si la direction de polarisation linaire incidente est parallèle ou orthogonale à la direction des contraintes mécaniques résiduelles, la polarisation émergente est une polarisation linéaire de même direction de polarisation que la direction de polarisation linaire incidente, autrement dit il n'y pas de changement de l'état de polarisation ;
- sinon la polarisation émergente est une polarisation elliptique ou circulaire dont la direction du grand axe et l'ellipticité dépendent de cet angle et de l'intensité des contraintes.

Dans les méthodes qui mettent en œuvre une lumière incidente polarisée linéairement, on analyse la polarisation résultante à l'aide d'un analyseur linéaire, c'est-à-dire en pratique généralement à l'aide d'un filtre polarisant linéaire. Généralement on dispose les éléments de telle sorte que la direction de polarisation de l'analyseur linéaire est orthogonale à la direction de polarisation linéaire incidente, afin que l'image soit noire en l'absence de déphasage $\varphi$ induit par des contraintes mécaniques résiduelles. Cette solution préférée permet de s'affranchir au mieux des effets d'absorption et de réfraction qui diminuent l'intensité. Dans cette configuration, lorsque la polarisation de la lumière émergente qui émane du matériau analysé présente une modification de polarisation par rapport à la polarisation linéaire incidente, on voit les contraintes mécaniques résiduelles sous la forme d'une intensité lumineuse supérieure, dont la valeur dépend du déphasage $\varphi$ induit par les contraintes mécaniques résiduelles, mais également de la direction des contraintes. Ainsi on ne distingue une intensité lumineuse supérieure que pour les contraintes mécaniques résiduelles dont la direction n'est ni parallèle ni orthogonale à la direction de polarisation linéaire incidente. La détection n'est pas isotrope et ne permet pas de visualiser l'intégralité d'une région stressée mais seulement certaines parties de cette région. Par exemple si le stress est dû à une inclusion sphérique, on peut considérer que les contraintes générées sont en compression radiales autour de l'inclusion. Dans ce cas on n'observe que 4 taches blanches autour du défaut.

Dans les méthodes qui mettent en œuvre une lumière incidente polarisée circulairement traversant une région présentant des contraintes mécaniques résiduelles, la polarisation circulaire de la lumière incidente est obtenue en interposant devant la source lumineuse successivement et dans cet ordre dans le sens de propagation de la lumière, un polariseur linéaire, qualifié de polariseur linéaire source, ayant une direction de polarisation source, et une lame à retard quart d'onde, qualifiée de lame à retard quart d'onde source.

Les contraintes mécaniques résiduelles vont créer, lors du passage de la lumière au travers de l'objet examiné, un déphasage $\varphi$ induit additionnel entre les deux composantes orthogonales du champ électrique de la lumière. La lumière émergente, qui émane du matériau présentant des contraintes mécaniques résiduelles, présente donc une polarisation émergente qui est ensuite analysé au moyen d'un système d'analyse de polarisation qui est généralement ce qui sera appelé ci-après analyseur circulaire et qui comporte, successivement et dans cet ordre dans le sens de propagation de la lumière, une lame à retard quart d'onde d'analyse puis un analyseur de polarisation linéaire. La lame à retard quart d'onde d'analyse transforme la polarisation circulaire de la lumière émergente, qui émane du matériau, en une polarisation intermédiaire dont l'état de polarisation dépend du déphasage $\varphi$ induit par les contraintes mécaniques résiduelles, déphasage $\varphi$ induit qui est lui-même dépendant de l'intensité de la contrainte mécanique résiduelle. Si aucune contrainte mécanique résiduelle n'est présente sur le trajet, alors la polarisation intermédiaire est une polarisation linéaire selon une direction dite « direction de polarisation linéaire sans contrainte » qui est orientée à 45° de la direction de l'axe rapide de la lame à retard quart d'onde d'analyse. Sinon, en présence de contraintes mécaniques résiduelles dans le matériau, la polarisation intermédiaire est une polarisation elliptique, c'est-à-dire avec un déphasage différent de $\lambda/4$ en fonction du déphasage $\varphi$ induit par les contraintes mécaniques résiduelles. Cette polarisation intermédiaire est ensuite encore analysée au moyen de l'analyseur de polarisation linéaire (aussi appelé analyseur linéaire) de l'analyseur circulaire. Cet analyseur linéaire, qui fait partie de l'analyseur circulaire, peut notamment prendre la forme d'un filtre polariseur linéaire.

Dans un analyseur circulaire, l'analyseur linéaire qui fait partie de l'analyseur circulaire présente une direction de polarisation qui est orientée à 45 degrés de l'axe rapide de la lame à retard quart d'onde d'analyse.

Dans les cas où le dispositif d'illumination délivre une lumière incidente qui est polarisée circulairement dans un sens, qui sera appelé arbitrairement sens d'incidence, on appellera analyseur circulaire inverse un analyseur circulaire dont l'orientation de l'analyseur linéaire est telle que, en l'absence de contraintes mécaniques résiduelles dans le récipient qui analysé (donc aussi en l'absence de récipient entre la source lumineuse et l'analyseur), on obtient une extinction de l'intensité reçue par le capteur photoélectrique 22. On dira qu'un tel analyseur circulaire inverse présente une caractéristique d'analyse de polarisation qui est une analyse circulaire inverse. Dans un tel analyseur circulaire inverse, l'analyseur linéaire est agencé de sorte que sa direction de polarisation soit orthogonale à la « direction de polarisation linéaire sans contrainte » fixée par la direction de l'axe rapide de la lame à retard quart d'onde d'analyse, de manière à obtenir une extinction si la polarisation n'est pas modifiée par un défaut de stress sur son parcours à travers le récipient. Dans un tel cas, l'intensité de la lumière captée, qui ne dépend que du retard créé par les contraintes mécaniques résiduelles, est donc indépendante de la direction de ces contraintes mécaniques résiduelles, elle ne dépend que de leur intensité.

Inversement, on appellera analyseur circulaire direct un analyseur circulaire dont l'orientation de l'axe de polarisation de l'analyseur linéaire est parallèle à la « direction de polarisation linéaire sans contrainte » fixée par la direction de l'axe rapide de la lame à retard quart d'onde d'analyse, de telle sorte que, en l'absence de récipient entre la source lumineuse et l'analyseur, on obtient, sur le capteur photoélectrique, l'intégralité de la lumière incidente polarisée circulairement dans le sens d'incidence. On dira qu'un tel analyseur circulaire direct présente une caractéristique d'analyse de polarisation qui est une analyse circulaire directe.

La valeur d'un pixel d'une image numérique de polarisation mesure une intensité lumineuse comprise entre 0 et un niveau de gris maximum, correspondant, si l'on prend la précaution d'éviter la saturation des pixels en réglant convenablement le gain et le temps d'intégration, à l'intensité de la lumière incidente diminuée de l'absorption par l'épaisseur de matériau traversée, soit Io, modifiée ou non par les modifications de l'état de polarisation dues aux contraintes mécaniques résiduelles et à l'analyseur de chaque pixel. Classiquement une échelle arbitraire de numérisation attribue à chaque niveau de gris de l'intensité lumineuse mesurée une valeur allant donc par exemple 0 à 100% ou de 0 à 255 (permettant un codage binaire sur 8 bit). Si un calcul de déphasage est réalisé, l'échelle de déphasage peut être prévue pour que chaque pixel de l'image de déphasage par exemple entre 0 à 255 pourra représenter selon le cas des déphasages de 0° à 90° ou de 0° à 180°. Bien entendu, des valeurs de pixels codées sur 10 ou 16 bits par exemple sont envisageables selon la dynamique des éléments photo-électriques du capteur.

On comprend donc que, aussi bien les images numériques de polarisation que les images numériques d'intensité fournissent des informations utiles sur la présence éventuelle de défauts dans le matériau constitutif du récipient en verre. Aussi, dans un processus industriel de contrôle de la qualité de récipients en verre, on peut vouloir mettre en œuvre des procédés opto-informatiques d'analyse exploitant d'une part des images numériques d'intensité et d'autre part des images numériques de polarisation. Une solution serait donc de disposer de deux dispositifs d'acquisition d'images, l'un pour acquérir des images numériques de polarisation, et l'autre pour acquérir des images numériques d'intensité. Cependant, dans un contexte industriel, la multiplication des postes de contrôle peut être handicapante, à la fois en termes de coûts et en termes d'encombrement. Ce dernier point est particulièrement important si l'on veut pouvoir mettre en œuvre un procédé opto-informatique d'analyse des récipients en ligne dans une ligne industrielle de production de récipients en verre et/ou dans une ligne industrielle de transport automatisé des récipients en verre, et/ou dans une ligne industrielle automatisée de remplissage des récipients en verre.

Selon un autre aspect, l'acquisition d'images numériques de polarisation est très utile pour les informations que l'on peut en tirer, notamment par exemple en termes de contraintes mécaniques résiduelles du matériau, mais cette information de polarisation doit généralement être interprétée pour déterminer si la valeur de contraintes mécaniques résiduelles que l'on peut tirer de ces images est constitutive d'un défaut ou pas. Par exemple, dans un process de production de récipient en verre comportant des gravures, il est à peu près inévitable que les régions comportant des gravures provoquent certains déphasages de polarisation qui ne doivent pas conduire au rejet des récipients, parce que le matériau constitutif du récipient présente, au niveau des gravures, des contraintes résiduelles qui, tout en étant largement supérieures aux contraintes résiduelles dans le matériau en dehors des gravures, restent néanmoins tout à fait acceptables et ne compromettent pas la qualité du récipient, et/ou parce que l'état de polarisation de la lumière soit modifié par la réfraction de la lumière sur les bords pentus des gravures, cette modification pouvant être interprétée comme un effet de contraintes résiduelles alors que le récipient reste néanmoins tout à fait acceptable. De la sorte, il apparaît nécessaire de pouvoir corréler des zones dans lesquelles on détecte un déphasage de polarisation avec des régions du récipient dans lesquelles de tels déphasages de polarisation peuvent être attendus, ceci afin éventuellement de ne pas rejeter un récipient de manière indue.

De manière générale, on sait qu'il est généralement intéressant de pouvoir subdiviser l'image d'un objet inspecté, en l'occurrence l'image d'un récipient en verre, en différentes zones pour lesquelles l'analyse de l'image sera faite éventuellement avec des algorithmes différents et/ou avec des niveaux de seuils différents. Cela suppose donc d'être capable de corréler une zone de l'image avec une zone du récipient correspondant. Dans les images d'intensité, cela est généralement bien maîtrisé, car on connaît des procédés de reconnaissance de forme dans les images d'intensité en lumière traversante qui permettent par exemple de détecter les bords du récipient et de reconnaître d'éventuels marqueurs géométriques. En revanche, de manière classique, les images de polarisation sont des images dans lesquelles on ne voit que les zones présentant un déphasage de polarisation, qu'il est généralement impossible d'associer à une position relative sur le récipient.

L'invention vise donc à proposer un procédé et un dispositif opto-informatique d'analyse de récipients en verre mettant en œuvre une caméra polarimétrique et qui soit à la fois compact et économique tout en étant apte à fournir des informations permettant de limiter le risque de rejeter inutilement des récipients.

Exposé de l'invention

Dans le but ci-dessus, l'invention propose un dispositif et un procédé opto-informatique d'analyse en lumière traversante d'un récipient en matériau transparent ou translucide tel que le verre à l'aide d'une caméra polarimétrique, la caméra polarimétrique comportant un capteur photoélectrique bidimensionnel comprenant des éléments photoélectriques comprenant chacun une cellule photoélectrique devant laquelle est agencé un système d'analyse de polarisation comprenant au moins un analyseur de polarisation individuel associé à la cellule photoélectrique de cet élément photoélectrique, le capteur photoélectrique comportant un nombre N de groupes distincts d'éléments photoélectriques contigus, chaque groupe distinct d'éléments photoélectriques contigus comprenant un nombre K supérieur ou égal à deux d'éléments photoélectriques appartenant respectivement à l'une parmi un nombre F supérieur ou égal à deux de familles distinctes d'éléments photoélectriques, chaque famille d'éléments photoélectriques étant définie par une caractéristique d'analyse de polarisation du système de d'analyse de polarisation commune à chacun de ses éléments photoélectriques, les caractéristiques d'analyse de polarisation des au moins deux familles comprenant au moins deux analyses linéaires selon deux axes de polarisation orthogonaux ou au moins deux analyses circulaires de sens inverse l'un de l'autre, chaque groupe distinct d'éléments photoélectriques comprenant au moins deux éléments photoélectriques appartenant à au moins deux familles distinctes, et chaque groupe distinct d'éléments photoélectriques contigus correspondant à un pixel composite dans une image maîtresse délivrée par le capteur.

Le procédé comporte :

- l'illumination du récipient, par l'arrière, par un dispositif d'illumination délivrant, sur le récipient, une lumière incidente polarisée, soit circulairement avec un premier sens de rotation, soit linéairement selon un axe de polarisation d'incidence ;
- l'observation du récipient, par l'avant, par la caméra polarimétrique, de manière à recueillir, sur le capteur photoélectrique de la caméra polarimétrique, une lumière émergente émanant du récipient ;
- l'acquisition, avec le capteur photoélectrique de la caméra polarimétrique, d'au moins une image numérique maîtresse du récipient, ayant un nombre K*N de pixels maîtres correspondants à N groupes distincts d'éléments photoélectriques contigus, l'image maîtresse comprenant N pixels composites, chaque pixel composite correspondant à un des groupes d'éléments photoélectriques contigus, et l'image maîtresse comprenant le nombre K d'images partielles distinctes ayant chacune N pixels partiels, les pixels partiels de chaque image partielle correspondant, pour une image partielle donnée, à une seule famille d'éléments photoélectriques du capteur photoélectrique pris dans les N pixels composites ;
- le calcul informatique d'une image d'intensité dans laquelle la valeur de chaque pixel d'intensité est une valeur moyennée de la valeur d'au moins deux pixels partiels correspondant à deux éléments photoélectriques d'un même groupe mais appartenant à deux familles distinctes d'éléments photoélectriques dont les caractéristiques d'analyse de polarisation sont deux analyses circulaires de sens inverses l'un de l'autre ou deux analyses linéaires d'axes de polarisation orthogonaux ou deux analyses elliptiques orthogonales ;

- le calcul informatique d'au moins une image de déphasage en calculant, pour une série de pixels composites, un pixel de déphasage qui correspond à un pixel composite et dont la valeur est représentative d'un déphasage de polarisation induit, par une contrainte mécanique résiduelle dans la zone élémentaire du récipient correspondant au pixel composite, dans la lumière émergente émanant de la zone élémentaire du récipient correspondant au pixel composite, à partir de la valeur d'un ensemble d'un ou plusieurs pixel(s) partiel(s) tous extraits du pixel composite et appartenant à une combinaison d'une ou plusieurs images partielles, le calcul informatique de chaque pixel de déphasage d'une image de déphasage donnée étant effectué à partir de la même combinaison d'une ou plusieurs images partielles.

Un tel procédé selon l'invention peut de plus comprendre une ou plusieurs des caractéristiques optionnelles suivantes, prises seules ou en combinaison.

Dans une série de variantes, le procédé opto-informatique d'analyse peut être tel que :

- le capteur photoélectrique comprend au moins deux familles distinctes d'éléments photo-électriques dont les caractéristiques d'analyse de polarisation sont deux analyses linéaires respectivement selon un premier axe de polarisation et second axe de polarisation orthogonal au premier axe de polarisation ;
- la lumière incidente est polarisée linéairement selon le deuxième axe de polarisation ;
- le calcul informatique de chaque pixel de déphasage pour une image de déphasage donnée est effectué à partir de la valeur d'au moins le pixel partiel (Ppk(n)) correspondant au premier axe de polarisation ;
- la valeur de chaque pixel d'intensité de l'image d'intensité est une valeur moyennée de la valeur de deux pixels partiels extraits du même pixel composite et associés chacun à l'une des deux familles dont les axes de polarisation sont orthogonaux et/ou de deux pixels partiels associés chacun à une de deux familles distinctes d'éléments photo-électriques dont les caractéristiques d'analyse de polarisation sont deux analyses circulaires de sens inverses l'un de l'autre.

Dans une série de variantes, le procédé opto-informatique d'analyse peut être tel que :

- le capteur photoélectrique comprend au moins quatre familles distinctes d'éléments photo-électriques dont les caractéristiques d'analyse de polarisation comprennent au moins quatre analyses linéaires selon des axes de polarisations comprenant deux paires d'axes de polarisation orthogonaux, les deux paires d'axes de polarisation étant décalées l'une de l'autre de 45 degrés d'angle ;
- la lumière incidente est polarisée circulairement dans un sens d'incidence ;
- le calcul informatique de chaque pixel de déphasage pour une image de déphasage donnée est effectué à partir des valeurs des quatre pixels partiels extraits du même pixel composite et associés chacun à une de quatre familles distinctes d'éléments photo-électriques dont les caractéristiques d'analyse de polarisation sont lesdites analyses linéaires ;
- la valeur de chaque pixel d'intensité de l'image d'intensité est une valeur moyennée d'au moins deux pixels partiels extraits du même pixel composite et associés chacun à deux familles distinctes d'éléments photo-électriques dont les caractéristiques d'analyse de polarisation sont deux analyses linéaires d'axes de polarisation orthogonaux.

Dans une série de variantes, le procédé opto-informatique d'analyse peut être tel que :

- la lumière incidente est polarisée circulairement dans un sens d'incidence ;
- le capteur photoélectrique comprend au moins une famille d'éléments photo-électriques dont la caractéristique d'analyse de polarisation est une analyse circulaire de sens inverse du sens d'incidence ;
- le calcul informatique de chaque pixel de déphasage pour une image de déphasage donnée est effectué à partir d'au moins la valeur du pixel partiel associé à la famille dont l'analyse circulaire est de sens inverse du sens d'incidence ;
- la valeur de chaque pixel d'intensité de l'image d'intensité est une valeur moyennée de deux pixels partiels extraits du même pixel composite et associés chacun à une de deux familles dont les analyses circulaires sont de sens inverses l'un de l'autre et/ou de deux pixels partiels associés chacun à une de deux familles distinctes d'éléments photo-électriques dont les caractéristiques d'analyse de polarisation sont deux analyses linéaires d'axes de polarisation orthogonaux ou deux analyses elliptiques orthogonales.

Dans une série de variantes, le procédé opto-informatique d'analyse peut être tel que :

- le capteur photoélectrique comprend au moins deux familles distinctes d'éléments photo-électriques dont les caractéristiques d'analyse de polarisation sont deux analyses circulaires de sens inverses l'un de l'autre ;

- la lumière incidente est polarisée circulairement,

- le calcul informatique de chaque pixel de déphasage pour une image de déphasage donnée est effectué à partir de la valeur des deux pixels partiels extraits du même pixel composite et correspondants chacun à l'une des deux analyses circulaires de sens inverses,

- la valeur de chaque pixel d'intensité de l'image d'intensité est une valeur moyennée de deux pixels partiels extraits du même pixel composite et associés chacun à l'une des deux familles dont les analyses circulaires sont inverses l'un de l'autre et/ou de deux pixels partiels extraits du même pixel composite et associés chacun à une de deux familles distinctes d'éléments photo-électriques dont les caractéristiques d'analyse de polarisation sont deux analyses linéaires d'axes de polarisation orthogonaux ou deux analyses elliptiques orthogonales.

Dans certaines variantes, le procédé opto-informatique d'analyse peut être tel qu'il comprend le calcul informatique d'une image d'intensité dans laquelle chaque pixel d'intensité est une valeur moyennée de la valeur de plusieurs couples distincts de pixels partiels appartenant à un même pixel composite, chaque couple distinct de pixels partiels correspondant à un couple distinct de caractéristiques d'analyse de polarisation, chaque couple distinct de caractéristiques d'analyse de polarisation étant choisi parmi un ou plusieurs couples de deux analyses circulaires de sens inverses l'un de l'autre, un ou plusieurs couples de deux analyses linéaires d'axes de polarisation orthogonaux, et/ou un ou plusieurs couples de deux analyses elliptiques orthogonales entre elles.

Dans certaines variantes, le procédé opto-informatique d'analyse peut être tel qu'il comprend :

- la reconnaissance informatique, dans l'image d'intensité, d'un marqueur géométrique connu du récipient et la détermination de sa localisation dans l'image d'intensité ; et,

en utilisant le lien de localisation, dans leurs images respectives, entre les pixels partiels (Ppk(n)), le pixel d'intensité (Pt(n)) le pixel de déphasage (Pd(n)) et le pixel composite (Pc(n)) associés :

• d'une part la détermination informatique d'au moins une région d'intérêt dans l'image de déphasage en fonction de la localisation du marqueur géométrique,

• et d'autre part l'identification informatique de la présence d'une région stressée dans la région d'intérêt de l'image de déphasage.

Dans certaines variantes, le procédé opto-informatique d'analyse peut être tel que l'identification informatique de la présence d'une région stressée prend en compte la valeur des pixels de déphasage et leur localisation relative par rapport au marqueur géométrique.
Dans certaines variantes, le procédé opto-informatique d'analyse peut être tel qu'il comprend la détermination informatique de la localisation relative de la région stressée sur le récipient par rapport au marqueur géométrique.
Dans certaines variantes, le procédé opto-informatique d'analyse peut être tel qu'il comprend une étape informatique de classification de la région stressée qui prend en compte la localisation relative de la région stressée sur le récipient par rapport au marqueur géométrique, déterminée informatiquement, et une grandeur représentative d'un déphasage de polarisation, induit par une contrainte mécanique résiduelle dans la région stressée, dans la lumière émergente émanant de la région stressée, la grandeur représentative d'un déphasage de polarisation étant calculée informatiquement à partir des valeurs des pixels partiels correspondants à la région stressée.
Dans certaines variantes, le procédé opto-informatique d'analyse peut être tel que la lumière incidente présente un spectre d'énergie compris entre 250 nm et 1000 nm et de largeur inférieure à 150nm, de préférence de largeur inférieure à 100 nm.
Dans certaines variantes, le procédé opto-informatique d'analyse peut être tel que chaque groupe distinct d'éléments photoélectriques contigus comprend quatre éléments photoélectriques appartenant respectivement à l'une parmi quatre familles distinctes d'éléments photoélectriques, les caractéristiques d'analyse de polarisation des quatre familles comprenant quatre d'analyse linéaires selon des axes de polarisation comprenant deux paires d'axe de polarisation orthogonaux, les deux paires étant décalées l'une de l'autre de 45 degrés d'angle, dans un sens ou dans l'autre, et tel que chaque groupe distinct d'éléments photoélectriques comprend un élément photoélectrique appartenant à chaque famille distincte.
Dans certaines variantes, le procédé opto-informatique d'analyse peut être tel que le dispositif d'illumination comprend une source lumineuse étendue dont les dimensions, perpendiculairement à un axe d'incidence allant de la source lumineuse vers le récipient, sont supérieures aux dimensions correspondantes de la partie à analyser du récipient.
Dans certaines variantes, le procédé opto-informatique d'analyse peut être tel que l'on détermine informatiquement, dans l'image d'intensité, des particularités optiques d'absorption ou réfraction pour détecter des défauts du récipient.

Dans certaines variantes, le procédé opto-informatique d'analyse peut être tel que l'on détecte informatiquement dans l'image maîtresse ou l'image d'intensité ou l'image de déphasage, des pixels candidats ou des régions candidates dont les valeurs sont hors d'un intervalle donné, ou différentes de celles des pixels ou des régions voisines, on calcule informatiquement pour chacun des pixels candidats ou des régions candidates les valeurs des pixels d'intensité et les valeurs des pixels de déphasage de polarisation correspondants, et on classifie informatiquement chacun des pixels candidats ou des régions candidates en tant que défaut ou en tant que non défaut et/ou on les classifie informatiquement en défauts de différents types parmi au moins un bouillon, ou une inclusion, à partir des valeurs des pixels d'intensité, des valeurs de déphasage de polarisation et de la localisation relative par rapport au marqueur géométrique.

L'invention concerne aussi un dispositif d'analyse en lumière traversante de défauts dans un récipient transparent ou translucide :

- comprenant un dispositif d'illumination délivrant, sur un récipient placé en un emplacement d'analyse du dispositif, une lumière incidente polarisée circulairement avec un sens de rotation d'incidence,
- comprenant une caméra polarimétrique, la caméra polarimétrique comportant un capteur photoélectrique bidimensionnel comprenant des éléments photoélectriques comprenant chacun une cellule photoélectrique devant laquelle est agencé un système d'analyse de polarisation comprenant au moins un analyseur de polarisation individuel associé à la cellule photoélectrique de cet élément photoélectrique, le capteur photoélectrique comportant un nombre N de groupes distincts d'éléments photoélectriques contigus, chaque groupe distinct d'éléments photoélectriques contigus comprenant quatre éléments photoélectriques appartenant respectivement à quatre familles distinctes d'éléments photoélectriques, chaque famille d'éléments photoélectriques étant définie par une caractéristique d'analyse de polarisation de l'analyseur de polarisation individuel qui est commune à chacun de ses éléments photoélectriques,
- pour chacune des au moins 4 familles, les analyseurs de polarisation individuels associés à chacune des quatre familles sont des filtres polarisants linéaires, les filtres polarisants individuels correspondant à une famille ayant le même axe de polarisation, les axes de polarisation étant distincts pour les 4 familles et les axes de polarisation des filtres polarisants individuels correspondant aux 4 familles comprenant deux paires d'axes de polarisation orthogonaux, les deux paires étant décalées l'une de l'autre de 45 degrés d'angle, dans un sens ou dans l'autre, et
- chaque groupe distinct d'éléments photo-électriques comprenant un élément photo-électrique appartenant à chaque famille distincte.

Le dispositif est caractérisé, en ce que le système d'analyse de polarisation comporte une lame à retard quart d'onde de la lumière incidente, qui est interposée entre l'emplacement d'analyse et les filtres polarisants individuels, et dont l'axe rapide est agencé à 45 degrés d'angle de l'axe de polarisation des filtres polarisants individuels d'une des quatre familles, de sorte que les caractéristiques les filtres polarisants individuels de polarisation des quatre familles comprennent deux analyses linéaires selon des directions orthogonales et deux analyses circulaires de sens inverses l'un de l'autre.

Le dispositif peut de plus comporter un système informatique programmé pour :

- acquérir, avec le capteur photoélectrique de la caméra polarimétrique, au moins une image numérique maîtresse du récipient, ayant un nombre K*N de pixels maîtres correspondants à N groupes distincts d'éléments photoélectriques contigus, l'image maîtresse comprenant N pixels composites, chaque pixel composite correspondant à un des groupes d'éléments photoélectriques contigus, et l'image maîtresse comprenant le nombre K d'images partielles distinctes ayant chacune N pixels partiels, les pixels partiels de chaque image partielle correspondant, pour une image partielle donnée, à une seule famille d'éléments photoélectriques du capteur pris dans les N pixels composites ;
- calculer informatiquement une image d'intensité (It) dans laquelle la valeur de chaque pixel d'intensité (Pt(n)) est une valeur moyennée de la valeur d'au moins deux pixels partiels (Ppk(n)) extraits du même pixel composite (Pc(n)) et correspondant à deux éléments photoélectriques d'un même groupe (26(n)) mais appartenant à deux familles distinctes d'éléments photoélectriques dont les caractéristiques d'analyse de polarisation sont deux analyses circulaires de sens inverses l'un de l'autre ou deux analyses linéaires d'axes de polarisation orthogonaux ou deux analyses elliptiques orthogonales ;
- calculer informatiquement au moins une image de déphasage en calculant, pour une série de pixels composites, un pixel de déphasage qui correspond à un pixel composite et dont la valeur est représentative d'un déphasage de polarisation, induit par une contrainte mécanique résiduelle dans la zone élémentaire du récipient correspondant au pixel composite, dans la lumière émergente émanant de la zone élémentaire du récipient correspondant au pixel composite, à partir de la valeur d'un ensemble d'un ou plusieurs pixel(s) partiel(s) tous extraits du pixel composite et appartenant à une combinaison d'une ou plusieurs images partielles, le calcul informatique de chaque pixel de déphasage d'une image de déphasage donnée étant effectué à partir de la même combinaison d'une ou plusieurs images partielles.

Brève description des dessins

[Fig. 1] La figure 1 est une vue schématique d'un dispositif selon l'invention.

[Fig. 2] La figure 2 est une vue schématique en perspective éclatée de quelques composants d'un capteur photo-électrique d'une caméra polarimétrique.

[Fig. 3] La figure 3 est une vue schématique à plat de quelques composants d'un capteur photoélectrique d'une caméra polarimétrique.

[Fig. 4] La figure 4 est un digramme illustrant schématiquement une configuration des caractéristiques d'analyse de polarisation pour un groupe d'éléments photoélectrique d'une caméra polarimétrique.

[Fig. 5] La figure 5 est un digramme illustrant schématiquement une autre configuration des caractéristiques d'analyse de polarisation pour un groupe d'éléments photoélectrique d'une caméra polarimétrique.

[Fig. 6] La figure 6 est un digramme illustrant schématiquement encore une autre configuration des caractéristiques d'analyse de polarisation pour un groupe d'éléments photoélectrique d'une caméra polarimétrique.

[Fig. 7] La figure 7 est un digramme illustrant schématiquement une configuration des caractéristiques d'analyse de polarisation pour un capteur photoélectrique d'une caméra polarimétrique.

[Fig. 8] La figure 8 est une vue schématique d'un autre dispositif selon l'invention et illustrant un processus d'obtention d'une image d'intensité et d'une image de déphasage à partir d'une image maîtresse acquise à l'aide d'un tel dispositif.

[Fig. 9] La figure 9 illustre le lien entre les images partielles et l'image maitresse, et la possibilité d'obtenir des images d'intensité à partir d'un ou plusieurs couples d'images partielles.

[Fig. 10] La figure 10 illustre un processus d'obtention d'une image d'intensité et d'une image de déphasage à partir d'une image maîtresse.

[Fig. 11] La figure 11 illustre la relation entre la valeur d'un pixel de déphasage et la valeur réelle de déphasage, pour une série de variantes de procédés selon l'invention.

[Fig. 12] La figure 12 illustre la relation entre la valeur d'un pixel de déphasage et la valeur réelle de déphasage, pour une autre série de variantes de procédés selon l'invention.

Description des modes de réalisation

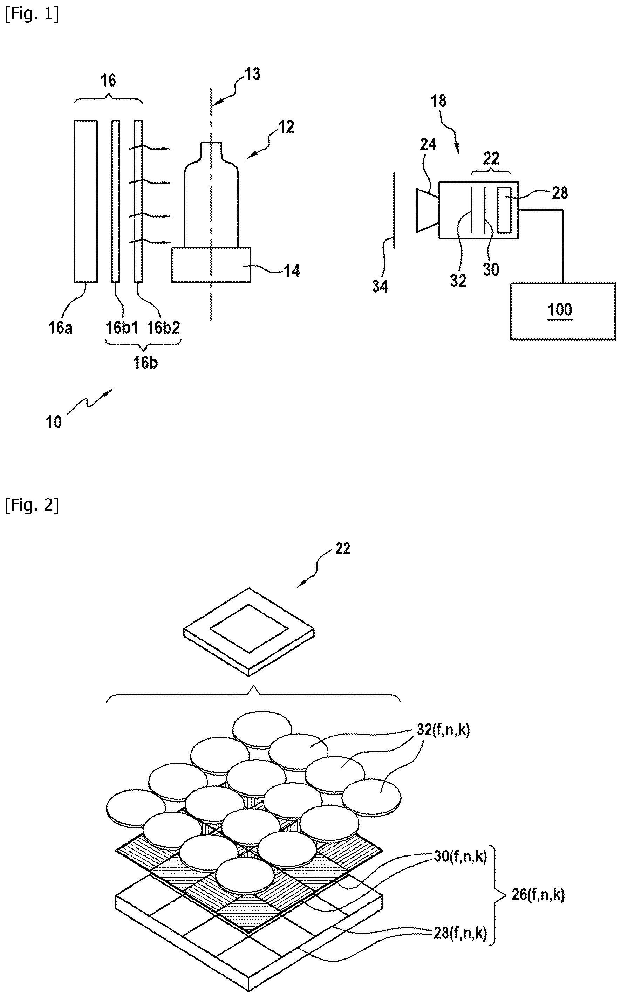

On a illustré sur la figure 1 un dispositif 10 optique d'analyse en lumière traversante de défauts dans un récipient 12 transparent ou translucide.

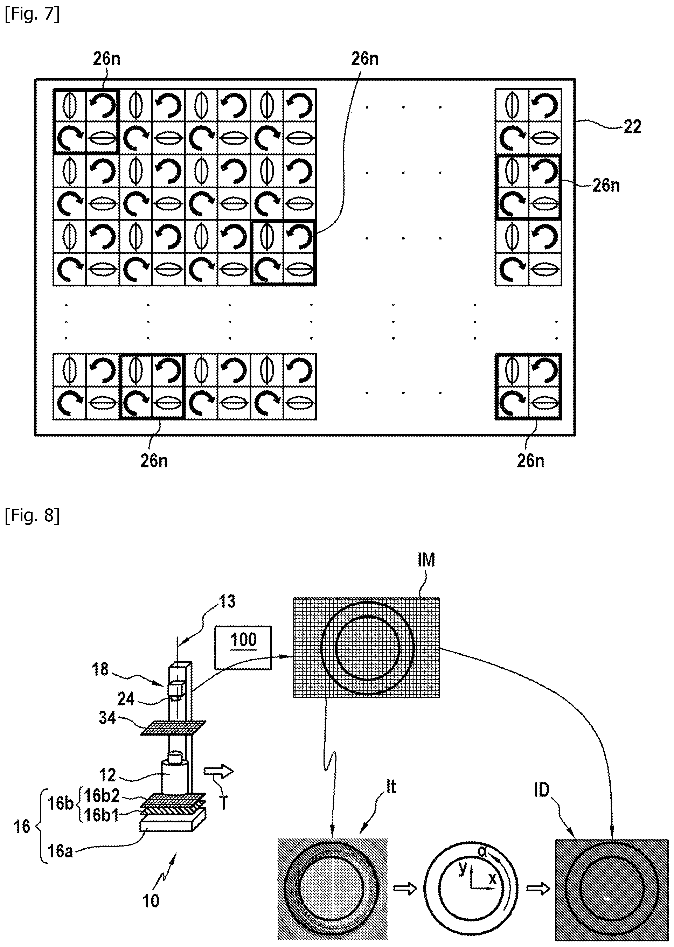

Dans toute la suite de la description, le récipient 12 est en verre. Un dispositif 10 analogue est aussi illustré sur la figure 8.

Dans des modes de réalisation non représentés, le récipient 12 est un récipient en matériau thermoplastique, par exemple obtenu par procédé d'extrusion soufflage de préforme thermoplastique.

Sans que cela soit limitatif, le récipient 12 est représenté vide, mais dans d'autre modes de réalisation, le récipient 12 est rempli d'un liquide translucide ou transparent, c'est-à-dire non opaque.

Sans que cela soit limitatif, le récipient 12 est représenté dépourvu de moyen de fermeture, par exemple un bouchon, mais dans d'autre modes de réalisation, le récipient 12 est fermé. Le dispositif 10 est conçu pour, et apte à, mettre en œuvre un procédé opto-informatique d'analyse en lumière traversante d'un récipient en matériau transparent ou translucide tel que le verre à l'aide d'une caméra polarimétrique.

Plus particulièrement, le dispositif est conçu pour, et apte à, mettre en œuvre un tel procédé dans une ligne industrielle de production de récipients en matériau transparent ou translucide tel que le verre et/ou dans une ligne industrielle de transport automatisé des récipients en matériau transparent ou translucide tel que le verre, et/ou dans une ligne industrielle automatisée de remplissage des récipients en matériau transparent ou translucide tel que le verre. Dans de telles lignes, des récipients sont transportés, par exemple par un convoyeur 14 de la ligne, selon une trajectoire de circulation, selon au moins une file de récipients successifs le long de la trajectoire. La cadence de défilement des récipients dans une telle ligne peut être par exemple comprise entre 150 et 1200 récipients par minute.

Le dispositif 10 est conçu et apte à être installé à un poste donné le long d'une telle ligne, de manière à mettre en œuvre le procédé opto-informatique d'analyse en lumière traversante successivement pour chaque récipient 12 de la file de récipients, au moment du passage du récipient à un emplacement d'analyse 13 du dispositif 10, emplacement auquel doit être placé un récipient 12 pour être analysé par le dispositif 10.

Au niveau de l'emplacement d'analyse 13 du dispositif 10, la trajectoire de circulation des récipients peut être une trajectoire rectiligne, ou une trajectoire curviligne. Dans l'illustration de la figure 1, la trajectoire de circulation des récipients 12 est une trajectoire rectiligne selon une direction perpendiculaire au plan de la figure 1. Dans l'illustration de la figure 8, la trajectoire de circulation des récipients 12 est une trajectoire rectiligne selon la flèche T. Dans ces deux exemples, l'emplacement d'analyse 13 peut être représenté par un axe vertical fixe par rapport au dispositif 10. Par exemple, on peut considérer que le récipient 12 est placé à l'emplacement d'analyse 13 lorsqu'un axe principal du récipient 12, par exemple un axe de symétrie du récipient, ou par exemple un axe de symétrie de révolution du récipient, coïncide avec l'axe vertical fixe correspondant à l'emplacement d'analyse 13. Dans l'exemple de la figure 1, le dispositif 10 est particulièrement conçu pour analyser la paroi latérale du récipient 12. Dans l'exemple de la figure 8, le dispositif 10 est particulièrement conçu pour analyser la paroi de fond du récipient 12.

Le dispositif 10 comprend un dispositif d'illumination 16 délivrant, sur le récipient 12, lorsque ce dernier est au niveau de l'emplacement d'analyse 13 du dispositif 10, une lumière incidente. En d'autres termes, le dispositif d'illumination 16 délivre la lumière incidente vers l'emplacement d'analyse 13 du dispositif 10.

Le dispositif 10 comprend aussi une caméra polarimétrique 18 permettant d'acquérir au moins une image numérique du récipient au moment de son passage à l'emplacement d'analyse 13 du dispositif 10, l'image numérique ainsi acquise étant utilisée dans le procédé d'analyse décrit plus bas.

S'agissant d'un dispositif d'analyse en lumière traversante, le dispositif d'illumination 16 comporte une source lumineuse 16a qui est agencée dans le champ de vision de la caméra polarimétrique 18. Ainsi, au moment de son passage à l'emplacement d'analyse 13 du dispositif 10, le récipient 12 à analyser se trouve agencé entre le dispositif d'illumination 16 et la caméra polarimétrique 18 sur le trajet de la lumière incidente délivrée par le dispositif d'illumination 16. En d'autres termes, l'emplacement d'analyse 13 du dispositif 10 se trouve agencé entre le dispositif d'illumination 16 et la caméra polarimétrique 18 sur le trajet de la lumière incidente délivrée par le dispositif d'illumination 16.

La lumière incidente délivrée par le dispositif d'illumination 16 est une lumière polarisée. Le dispositif d'illumination 16 peut ainsi comporter une source lumineuse 16a émettant une lumière non polarisée et un polariseur source 16b interposé entre la source lumineuse et l'emplacement d'analyse 13 du dispositif 10, emplacement auquel doit être placé le récipient 12 pour être analysé par le dispositif 10. Dans certains modes de réalisation, la lumière incidente, c'est-à-dire celle qui arrive sur le matériau du récipient 12, est polarisée linéairement selon un axe de polarisation d'incidence. Dans un tel cas, le polariseur source 16b est un polariseur linéaire ayant un axe de polarisation. Par exemple, un tel polariseur source linéaire peut comprendre une feuille de polaroïd ou des cristaux liquides. Cependant, certains modes de réalisation mettent en œuvre une lumière incidente polarisée circulairement avec un premier sens de rotation, aussi appelée sens de rotation incident. Dans un tel cas, le polariseur source 16b est un polariseur circulaire. Par exemple, un polariseur circulaire peut être formé d'un polariseur linéaire source 16b1 ayant un axe de polarisation source et d'une lame à retard quart d'onde 16b2 dont l'axe rapide, ci-après l'axe rapide source, est décalé de 45 degrés d'angle de l'axe de polarisation source.

De préférence, la source lumineuse 16a est une source lumineuse étendue. Par exemple, les dimensions de la surface éclairante de la source lumineuse 16a, perpendiculairement à un axe d'incidence allant de la source lumineuse 16a vers l'emplacement d'analyse 13, sont supérieures aux dimensions correspondantes de la partie à analyser du récipient 12.

De préférence, la lumière incidente présente un spectre d'énergie compris dans une bande de longueurs d'onde elle-même comprise entre 250 nm et 1000 nm, la bande de longueur d'onde ayant une largeur inférieure à 150nm, de préférence inférieure à 100 nm. Avec un tel spectre d'énergie, de faible largeur, la lumière incidente se rapproche d'une lumière monochromatique. Les effets des polariseurs linéaires sont en effet optimisés pour une longueur d'onde donnée. Par ailleurs, il est évident que si on utilise une lame à retard quart d'onde, qui n'est généralement adaptée qu'à une longueur d'onde précise ou à une bande de longueur d'onde de faible largeur autour de cette longueur d'onde précise, le retard induit n'est exactement d'un quart de la longueur d'onde que pour la valeur de longueur d'onde précise ou pour la bande de longueur d'onde de faible largeur autour de cette longueur d'onde précise.

La caméra polarimétrique 18 comporte un capteur photoélectrique 22 bidimensionnel capable de délivrer des images numériques d'un champ de vision déterminé par un objectif 24 de la caméra.

Le capteur photoélectrique 22 bidimensionnel comprend des éléments photoélectriques 26(f,n,k) comprenant chacun une cellule photoélectrique 28(f,n,k) devant laquelle est agencé un système d'analyse de polarisation comprenant au moins un analyseur de polarisation individuel 30(f,n,k) associé à la cellule photoélectrique 28(f,n,k) de cet élément photoélectrique 26(f,n,k).

La figure 2 représente un exemple d'un tel capteur, où l'on peut voir, sur le détail agrandi, que les cellules photoélectriques 28(f,n,k) sont agencées selon une grille plane à deux dimensions, et que les filtres polarisants individuels 30(f,n,k) associés chacun à une cellule photoélectrique 28(f,n,k) différente sont placés devant la cellule photoélectrique 28(f,n,k) correspondante. Dans l'exemple de la figure 2, le capteur photoélectrique 22 comporte, en plus, un réseau de micro lentilles 32(f,n,k) dont chacune est associée à un élément photoélectrique 26(f,n,k).

Chaque élément du système d'analyse de polarisation est interposé dans le trajet de la lumière entre l'emplacement d'analyse 13 du dispositif 10 et les cellules photoélectriques 28(f,n,k) du capteur photoélectrique 22, donc, en fonctionnement, entre le récipient 12 et les cellules photoélectriques 28(f,n,k) du capteur photoélectrique 22. Dans certains modes de réalisation, le système d'analyse de polarisation comprend au moins un analyseur de polarisation individuel 30(f,n,k), chaque analyseur de polarisation individuel 30(f,n,k) étant sous la forme d'un filtre polarisant linéaire, et au moins une lame à retard quart d'onde 34, commune à plusieurs éléments photoélectriques 26(f,n,k), voire commune à tous les éléments photoélectriques 26(f,n,k).

Dans un exemple préférentiel, tel qu'illustré à la figure 1 et à la figure 8, une lame à retard quart d'onde 34 commune à tous les éléments photoélectriques 26(f,n,k) est interposée entre le récipient 12 et les cellules photo-électriques 28(f,n,k) du capteur photoélectrique 22. Cette lame à retard quart d'onde 34 fait partie du système d'analyse de polarisation et pourra être désignée par la suite sous le vocable lame à retard quart d'onde d'analyse 34. De préférence, la lame à retard quart d'onde d'analyse 34 commune est agencée interposée entre l'emplacement d'analyse 13 et les analyseurs de polarisation individuels 30(f,n,k) sous forme de filtres polarisant linéaires.

Une lame à retard quart d'onde d'analyse 34, peut faire partie de la caméra polarimétrique 18, soit en étant intégrée au capteur photoélectrique 22, soit en étant placée entre l'objectif 24 et le capteur photoélectrique 22, soit en étant intégrée à l'objectif 24. En alternative, comme dans l'exemple illustré à la figure 1 et à la figure 8, une lame à retard quart d'onde d'analyse 34 peut être placée entre l'emplacement d'analyse 13 du dispositif 10, auquel le récipient 12 doit être placé pour être analysé, et l'objectif 24 de la caméra polarimétrique 18.

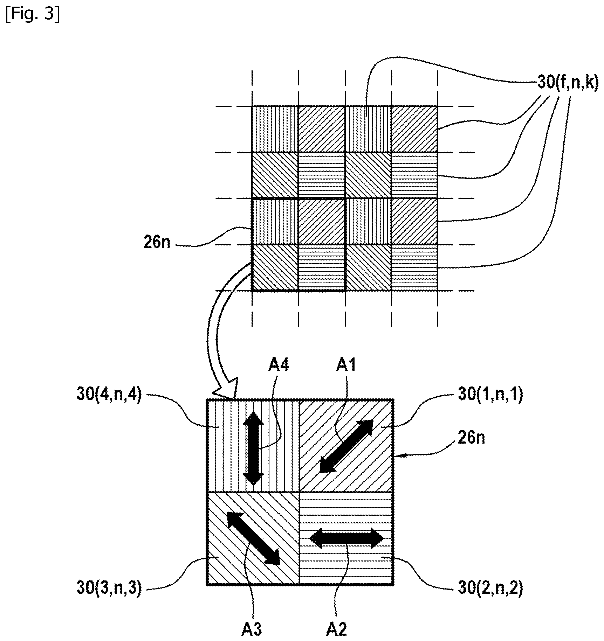

Pour un capteur photoélectrique donné, les éléments photoélectriques sont répartis en F familles 26(f) (avec f un entier variant de 1 à F) distinctes d'éléments photoélectriques 26(f,n,k). Le nombre F de familles 26(f) distinctes est supérieur ou égal à deux. Dans les exemples préférentiels illustrés sur les figures 3 à 8, le nombre F de familles distinctes 26(f) est égal à 4. Chaque famille 26(f) d'éléments photoélectriques est définie par une caractéristique d'analyse de polarisation du système d'analyse de polarisation, caractéristique d'analyse qui est commune à chacun de ses éléments photoélectriques 26(f,n,k ), avec dans ce cas l'entier f qui prend les valeurs 1 à 4. Les caractéristiques d'analyse des au moins deux familles 26(f) comprennent au moins deux analyses linéaires selon deux axes de polarisation orthogonaux ou au moins deux analyses circulaires de sens inverses l'un de l'autre.

Dans le cas d'une analyse linéaire, la caractéristique d'analyse de polarisation est induite par un analyseur de polarisation linéaire et elle inclut l'orientation de l'axe de polarisation linéaire de l'analyseur de polarisation linéaire. En effet, un analyseur de polarisation linéaire est généralement réalisé sous la forme d'un filtre polarisant linéaire.

Dans le cas d'une analyse circulaire, la caractéristique d'analyse de polarisation est l'action sur la polarisation qui est induite par l'analyseur circulaire, lequel est formé par exemple d'une lame à retard quart d'onde suivie, dans le sens de propagation de la lumière, par un filtre polarisant linéaire. La caractéristique d'analyse circulaire inclut le sens, direct ou inverse, de l'analyse circulaire de l'analyseur circulaire correspondant. Dans les exemples préférentiels comprenant 4 familles 26(f) distinctes ou plus, obtenues avec la présence d'une lame à retard quart d'onde d'analyse, les caractéristiques d'analyse de polarisation des au moins quatre familles 26(f) distinctes peuvent comprendre par exemple au moins deux analyses circulaires de sens inverses l'un de l'autre, l'une de sens direct correspondant au sens d'incidence d'une polarisation circulaire de la incidente, l'autre de sens inverse par rapport au même sens d'incidence de polarisation circulaire de la lumière incidente.

Dans certains modes de réalisation comprenant une lame à retard quart d'onde commune, les deux autres caractéristiques d'analyse de polarisation seront des analyses dites elliptiques correspondant aux cas où l'axe rapide de la lame à retard quart d'onde d'analyse est orthogonal ou parallèle à l'axe de polarisation de l'analyseur linéaire qui la suit au sein du système d'analyse de polarisation. Plus particulièrement deux analyses elliptiques seront dites orthogonales entre elles lorsqu'elles résulteront de la superposition d'une même lame de retard à quart d'onde avec respectivement deux analyseurs linéaires ayant des axes de polarisations orthogonaux entre eux.

On notera qu'un capteur photoélectrique 22 pour une caméra polarimétrique selon l'invention pourrait comporter, en plus des au moins deux familles 26(f) comprenant au moins deux analyses linéaires selon deux axes de polarisation orthogonaux ou au moins deux analyses circulaires de sens inverse, des éléments photoélectriques de polarisation neutre, c'est-à-dire sans analyseur de polarisation (filtre polarisant, lame à retard, ...) devant la cellule photoélectrique correspondante.

Pour le même capteur photoélectrique 22 donné, les éléments photoélectriques 26(f,n,k) sont répartis en un nombre N de groupes 26(n) (avec n un entier variant de 1 à N) distincts d'éléments photoélectriques 26(f,n,k) contigus. Dans un groupe donné, les éléments photoélectriques 26(f,n,k) sont contigus, et donc ne sont pas séparés par d'autres éléments photoélectriques appartenant à un autre groupe. De préférence, tous les éléments photoélectriques 26(f,n,k) du capteur photoélectrique appartiennent à un de ces groupes 26(n). De préférence, les groupes sont juxtaposés entre eux selon un motif répétitif sur la surface bidimensionnelle du capteur photoélectrique 22. Un tel groupe 26(n) d'éléments photoélectriques 26(f,n,k) est illustré par exemple aux figures 3 à 6. Chaque groupe distinct 26(n) d'éléments photo-électriques contigus 26(f,n,k) comprend un nombre K supérieur ou égal à deux d'éléments photoélectriques appartenant respectivement à l'une parmi le nombre F supérieur ou égal à deux de familles distinctes d'éléments photoélectriques, chaque groupe distinct 26(n) d'éléments photoélectriques 26(f,n,k) comprenant au moins deux éléments photoélectriques appartenant à au moins deux familles 26(f) distinctes. On notera qu'un groupe 26(n) d'éléments photoélectriques 26(f,n,k) peut comporter un ou plusieurs éléments photoélectriques de polarisation neutre tels que définis plus haut.

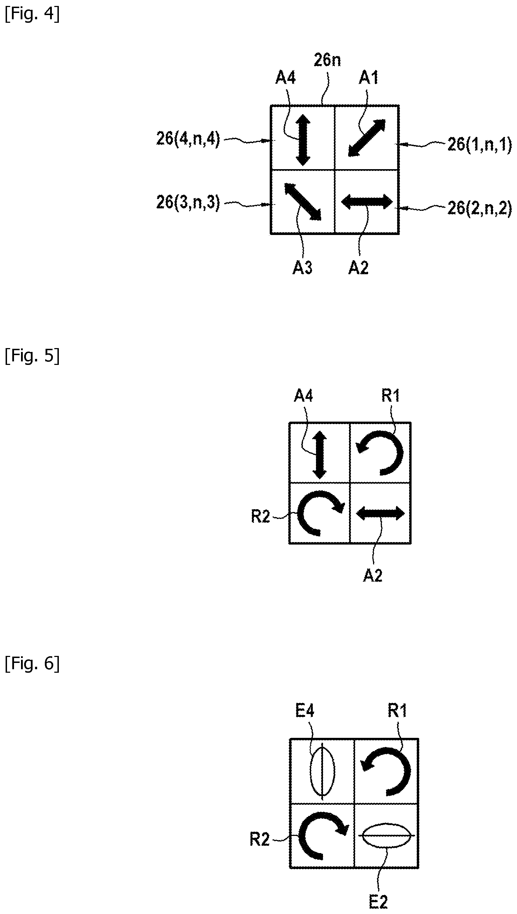

Dans certains modes de réalisation, le nombre K d'éléments photoélectriques dans chaque groupe 26(n) est égal au nombre F de familles distinctes 26(n) d'éléments photoélectriques. Dans un tel cas, chaque groupe 26(n) d'éléments photoélectriques 26(f,n,k) comporte un unique élément photoélectrique 26(f,n,k) de chaque familles distinctes 26(n) d'éléments photoélectriques. Par exemple, les figures 4 à 6 illustrent une partie d'un capteur 22 dans lequel chaque groupe 26(n) d'éléments photoélectriques 26(f,n,k) comporte quatre éléments photoélectriques qui appartiennent à chacun à une famille distincte 26(f) parmi quatre familles 26(f) distinctes d'éléments photoélectriques 26 (f,n,k). Dans l'exemple de la figure 4, les quatre familles 26(f) distinctes correspondent à quatre analyses de polarisation distincte, lesquelles sont quatre analyses linéaires selon quatre axes de polarisation distincts, par exemple deux paires d'axes de polarisation orthogonaux (A1, A3) et (A2, A4), les deux paires étant décalées l'un de l'autre de 45 degrés d'angle, dans un sens ou dans l'autre.

Dans l'exemple de la figure 5, les quatre familles 26(f) distinctes correspondent à quatre analyses de polarisation distinctes, lesquelles comprennent deux analyses linéaires selon deux axes polarisation distincts, en l'occurrence par exemple deux axes de polarisation orthogonaux, et deux analyses circulaires de sens R1 et R2 inverses l'un de l'autre.

Dans l'exemple de la figure 6, les quatre familles 26(f) distinctes correspondent à quatre analyses de polarisation distinctes, lesquelles comprennent deux analyses circulaires de sens R1 et R2 inverses l'un de l'autre, et deux analyses elliptiques E2, E4 orthogonales entre elles.

La notation utilisée dans le présent texte identifie un élément photoélectrique 26(f,n,k), ou une cellule photo-électrique 28(f,n,k) ou un analyseur de polarisation individuel 30(f,n,k) par le triplet d'indice (f,n,k), l'indice f permettant d'identifier la famille de polarisation 26(f) à laquelle il/elle appartient, l'indice n permettant d'identifier le groupe 26(n) auquel il appartient, et l'indice k permettant d'identifier son numéro d'ordre dans le groupe. Dans les cas où le nombre K d'éléments photoélectriques dans chaque groupe 26(n) est égal au nombre F de familles distinctes 26(n) d'éléments photoélectriques, on peut choisir d'attribuer, à chaque élément photoélectrique 26(f,n,k), ou cellule photoélectrique 28(f,n,k) ou analyseur de polarisation individuel 30(f,n,k), la même valeur à l'indice f permettant d'identifier la famille de polarisation 26(f) à laquelle il/elle appartient, et à l'indice k permettant d'identifier son numéro d'ordre dans le groupe, de sorte qu'on peut le noter avec un couple de seulement deux indices (f,n) ou (n,k), ces deux couples étant alors équivalents.

Dans d'autres modes de réalisation, le nombre K d'éléments photoélectriques dans chaque groupe 26(n) est supérieur au nombre F de familles distinctes 26(n) d'éléments photoélectriques. Dans un tel cas, chaque groupe 26(n) d'éléments photoélectriques 26(f,n,k) peut comporter au moins deux éléments photoélectriques 26(f,n,k) appartenant à une même famille 26(n) d'éléments photoélectriques.

On notera que la caractéristique d'analyse de polarisation pour un élément photoélectrique 26(f,n,k) est conditionnée par l'analyseur de polarisation individuel 30(f,n,k) de l'élément photoélectrique 26(f,n,k), mais sera aussi conditionnée par tout autre élément du système d'analyse de polarisation, notamment par une lame à retard quart d'onde d'analyse 34 du système d'analyse de polarisation. En l'absence de lame à retard d'analyse commune 34, la caractéristique d'analyse de polarisation pour un élément photoélectrique 26(f,n,k) est conditionnée par le l'analyseur de polarisation individuel 30(f,n,k) de l'élément photoélectrique 26(f,n,k).

Par exemple, sur la figure 3, notamment sur le détail de celle-ci, on a illustré le cas d'un capteur dans lequel un groupe 26(n) comporte 4 éléments photoélectriques pour lesquels les analyseurs de polarisation individuels 30(f,n,k) associés à chacune des quatre familles sont des filtres polarisants linéaires. Les filtres polarisants individuels correspondent à une famille donnée ont le même axe de polarisation linéaire. Les axes de polarisation sont distincts pour les 4 familles. De plus, les axes de polarisation des filtres polarisants individuels correspondant aux 4 familles comprennent deux paires (A1, A3) et (A2, A4) d'axes de polarisation orthogonaux, les deux paires étant décalées l'une de l'autre de 45 degrés d'angle, dans un sens ou dans l'autre.

En l'absence d'autres éléments dans le système d'analyse de polarisation, le capteur photoélectrique 22 de la figure 3 détermine ainsi quatre familles d'éléments photoélectriques 26(f,n,k) qui correspondent à quatre caractéristiques d'analyse de polarisation distinctes, celles déterminées par les filtres polarisants individuels 30(f,n,k). Ainsi, les quatre caractéristiques d'analyse de polarisation distinctes sont quatre analyses linéaires selon les quatre axes de polarisation distincts, par exemple deux paires (A1, A3) et (A2, A4) d'axes de polarisation orthogonaux, les deux paires étant décalées l'une de l'autre de 45 degrés d'angle, dans un sens ou dans l'autre. C'est le cas de figure illustré à la figure 4.

Toutefois, si on associe le même capteur photoélectrique 22 de la figure 3 avec une lame à retard quart d'onde d'analyse commune 34 à tous les éléments photoélectriques 26(f,n,k), qui est interposée entre l'emplacement d'analyse 13 du dispositif 10 et les filtres polarisants individuels 30(f,n,k), et dont l'axe rapide est agencé à 45 degrés d'angle de l'axe de polarisation des filtres polarisants individuels d'une des quatre familles, alors on obtient une caméra polarimétrique pour laquelle les caractéristiques d'analyse de polarisation des quatre familles comprennent deux analyses circulaires de sens R1 et R2 inverses l'un de l'autre, tel qu'illustré à la figure 6, et deux analyses que l'on peut qualifier arbitrairement d'analyses elliptiques E2, E4 orthogonales entre elles. Dans l'exemple de la figure 6, on a pris l'exemple de positionner l'axe rapide de la lame à retard quart d'onde d'analyse commune 34 à 45 degrés d'angle de l'axe de polarisation A1 des filtres polarisants individuels du capteur de la figure 3. Par conséquent, l'axe rapide de la lame à retard quart d'onde d'analyse commune 34 est parallèle ou orthogonal aux axes de polarisation A2, A4 des filtres polarisants individuels des éléments 26(2,n,2) et 26 (4,n,4) du capteur de la figure 3, ce qui forme pour ces éléments une caractéristique d'analyse de polarisation elliptique. Nous verrons que la valeur de pixels correspondants à ces analyses elliptiques ne seront pas utilisées pour les calculs de pixels de déphasage, mais peuvent être utilisés pour des calculs de pixels d'intensité.

Les groupes 26(n) sont répartis de manière uniforme sur l'étendue du capteur photoélectrique 22 bidimensionnel ou tout du moins sur l'étendue d'une zone utile de celui-ci, par exemple une zone excluant les bords du réseau d'éléments photoélectriques du capteur. De préférence, les groupes 26(n) sont répartis selon un pavage régulier couvrant toute les cellules photoélectriques du capteur photoélectrique 22, tout du moins sur l'étendue d'une zone utile du capteur photoélectrique 22, sans trou.

Dans un capteur photoélectrique donné, on peut prévoir que tous les groupes 26(n) d'éléments photoélectriques contigus soient identiques entre eux. Notamment, on peut prévoir que tous les groupes 26(n) comportent le même nombre d'éléments photoélectriques 26(f,n,k) appartenant à la même série de familles 26(f). Dans un tel cas, au sein de chaque groupe, les éléments photoélectriques appartenant aux différentes familles peuvent être positionnés les uns par rapport aux autres de manière identique au sein de leur groupe 26(n) respectif. C'est le cas de figure du capteur photoélectrique 22 illustré à la figure 7.

A contrario, on pourra prévoir que les groupes 26(n) diffèrent par le positionnement des éléments photo-électriques appartenant aux différentes familles au sein de leur groupe 26(n) respectif. De même, on pourrait prévoir que le capteur photoélectrique 22 des séries distinctes de groupe 26(n) d'éléments photoélectriques, les groupes d'une série étant différents des groupes d'une autre série.

Au total, dans les exemples illustrés, le capteur photoélectrique 22, ou tout du moins sa zone utile, par exemple une zone excluant les bords du réseau d'éléments photoélectriques du capteur, comprend un nombre KxN d'éléments photoélectriques 26(f,n,k) qui pourront être utilisés pour la mise en œuvre d'un procédé tel que décrit ci-dessous.

Dans un exemple préférentiel le capteur photoélectrique 22 comprend 4 familles distinctes 26(f) d'élements photoélectriques 26(f,n,k), le système d'analyse de polarisation comporte :

- un analyseur de polarisation individuel 30(f,n,k) pour chaque élément photoélectrique 26(f,n,k) ;
- pour chacune des 4 familles, les analyseurs de polarisation individuels 30(f,n,k) associés à chacune des quatre familles sont des filtres polarisants linéaires, les filtres polarisants individuels correspondant à une famille ayant le même axe de polarisation, les axes de polarisation étant distincts pour les 4 familles et les axes de polarisation des filtres polarisants individuels correspondant aux 4 familles comprenant deux paires (A1, A3) et (A2, A4) d'axes de polarisation orthogonaux, les deux paires étant décalées l'une de l'autre de 45 degrés d'angle, dans un sens ou dans l'autre, tel qu'illustré à la figure 3 ;
- une lame à retard quart d'onde d'analyse 34 commune à tous les éléments photoélectriques 26(f,n,k), qui est interposée entre l'emplacement d'analyse 13 du dispositif 10 et les analyseurs de polarisation individuels 30(f,n,k), et dont l'axe rapide est agencé à 45 degrés d'angle, dans un premier sens, de l'axe de polarisation des filtres polarisants individuels d'une des quatre familles, et donc nécessairement aussi agencé à 45 degrés d'angle, dans un second sens opposé au premier sens, de l'axe de polarisation des filtres polarisants individuels d'une autre des quatre familles.

Dans un tel exemple, on peut ainsi avoir un capteur photoélectrique 22 comportant un nombre N de groupes 26(n) distincts d'éléments photoélectriques 26(f,n,k) contigus dans lequel chaque groupe distinct d'éléments photo-électriques comprenant un unique élément photo-électrique appartenant à chaque famille 26(f) distincte. Ainsi, chaque groupe 26(n) distinct d'éléments photoélectriques contigus comprend quatre éléments photoélectriques 26(f,n,k) appartenant respectivement à quatre familles 26(f) distinctes d'éléments photoélectriques 26(f,n,k). Avec, la combinaison des effets des filtres polarisants individuels 30(f,n,k) et de la lame à retard quart d'onde commune dont l'axe rapide est agencé à 45 degrés d'angle de l'axe de polarisation des filtres polarisants individuels d'une des quatre familles, le système d'analyse de polarisation est tel que les caractéristiques d'analyse de polarisation des quatre familles comprennent dans tous les cas deux analyses circulaires de sens inverses l'un de l'autre, tel qu'illustré à la figure 5 pour ce qui concerne un groupe 26(n), et à la figure 7 pour le capteur photoélectrique 22. En plus de ces deux analyses circulaires de sens inverses l'un de l'autre, une ayant un premier sens et l'autre ayant un second sens inverse du premier, les caractéristiques d'analyse de polarisation des quatre familles comprennent aussi, pour deux autres familles, deux polarisations dites elliptiques.

La caméra polarimétrique 18, à travers son capteur photoélectrique 22, délivre donc une image numérique, appelée image maîtresse IM, qui peut comporter autant de pixels, appelés pixels maîtres Pm(f,n,k), que le nombre d'éléments photoélectriques. Dans une telle image maîtresse IM, on peut définir des groupes de pixels, chaque groupe de pixel étant ci-après un pixel composite Pc(n), où chaque pixel composite Pc(n) regroupe les pixels maîtres Pm(f,n,k) qui correspondent à un groupe 26(n) donné d'éléments photoélectriques contigus, tel que défini plus haut. Ainsi, à chaque groupe 26(n) distinct d'éléments photoélectriques contigus correspond un pixel composite dans l'image maîtresse délivrée par le capteur photoélectrique 22. Un pixel composite Pc(n) comporte donc K pixels maîtres Pm(f,n,k). Un pixel composite Pc(n) peut être considéré comme l'image d'une zone élémentaire du champ imagé, donc notamment, une zone élémentaire du récipient 12 qui se trouvait à l'emplacement d'analyse 13 au moment de l'acquisition de l'image maîtresse IM.

Un dispositif 10 tel que décrit ci-dessus est un exemple d'un dispositif qui permet de mettre en œuvre un procédé opto-informatique d'analyse en lumière traversante d'un récipient en matériau transparent ou translucide, tel que le verre à l'aide d'une caméra polarimétrique.

Le procédé comporte des étapes informatiques, notamment des étapes de calcul informatique qui seront réalisées par un système informatique 100, dont un exemple illustré de manière symbolique à la figure 1 et à la figure 8, peut être réalisé sous la forme d'au moins une unité de calcul informatique, par exemple un ordinateur standard. Le système informatique 100 peut comprendre des éléments qui sont intégrés à la caméra polarimétrique. Un tel système informatique 100 peut donc comporter un ou plusieurs microprocesseurs, une ou plusieurs unités de mémoire électronique et une ou plusieurs interfaces d'affichage (écran, projecteur, affichage holographique...), de saisie (clavier, souris, pavé tactile, écran tactile, ...), et / ou de communication (USB, Ethernet®, Wi-Fi®, Bluetooth®, Zigbee®, ...). Le système informatique peut comprendre un réseau informatique partageant des données avec un ou plusieurs autres ordinateurs du réseau, ou avec d'autres réseaux, par exemple par un protocole internet ou Ethernet®. En plus de son évidente liaison à la caméra polarimétrique, pour en recueillir les images maîtresses, le système informatique peut être relié à des capteurs donnant des informations d'état de l'installation, et / ou à des actionneurs de l'installation (convoyeurs, éjecteurs, ...). Le système informatique 100 peut être relié au dispositif d'illumination 16, pour en acquérir des données de fonctionnement, et / ou pour en assurer le contrôle. Le système informatique 100 met en œuvre un ou plusieurs logiciels, stockés(s) et / ou exécuté(s) en local ou à distance, y compris sur un ou plusieurs serveurs informatiques distants. Ce ou ces logiciel(s) comprennent de préférence un ou plusieurs logiciel(s) programmés pour mettre en œuvre les étapes informatiques du procédé selon l'invention.

Dans le dispositif, le système informatique, et notamment son unité informatique de calcul, est programmé pour effectuer tout ou partie du procédé qui va être décrit ci-après.

Un tel procédé comporte l'illumination du récipient 12, par l'arrière, par le dispositif d'illumination 16 qui délivre, sur le récipient 12, une lumière incidente polarisée, soit circulairement avec un premier sens de rotation, soit linéairement selon un axe de polarisation d'incidence.

Un tel procédé comporte, en même temps, l'observation du récipient 12, par l'avant, par la caméra polarimétrique 18, de manière à recueillir, sur le capteur photoélectrique 22 de la caméra polarimétrique 18, une lumière émergente émanant du récipient 12 situé à l'emplacement d'analyse. Cette lumière émergente, émanant du récipient 12, correspond à la lumière incidente délivrée par le dispositif d'illumination 16, mais ayant subi une potentielle transformation du fait d'avoir traversé l'épaisseur d'au moins une paroi du récipient 12. L'objectif 24 de la caméra est réglé pour former, sur le capteur photoélectrique 22, une image optique nette du récipient 12.

Pour les variantes de procédés dans lesquelles les caractéristiques d'analyse de polarisation des au moins deux familles comprennent deux analyses circulaires, le procédé peut comporter l'interposition, entre le récipient 12 et le capteur photoélectrique 22 de la caméra 18 polarimétrique, plus précisément entre le récipient 12 et les analyseurs de polarisation individuels 30(f,n,k), d'une lame à retard 34 d'un quart d'onde de la lumière incidente.

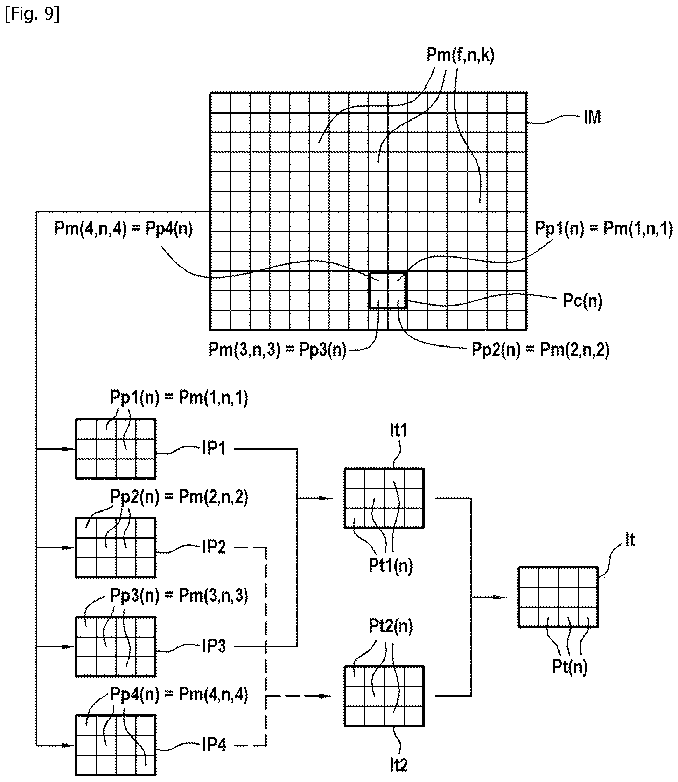

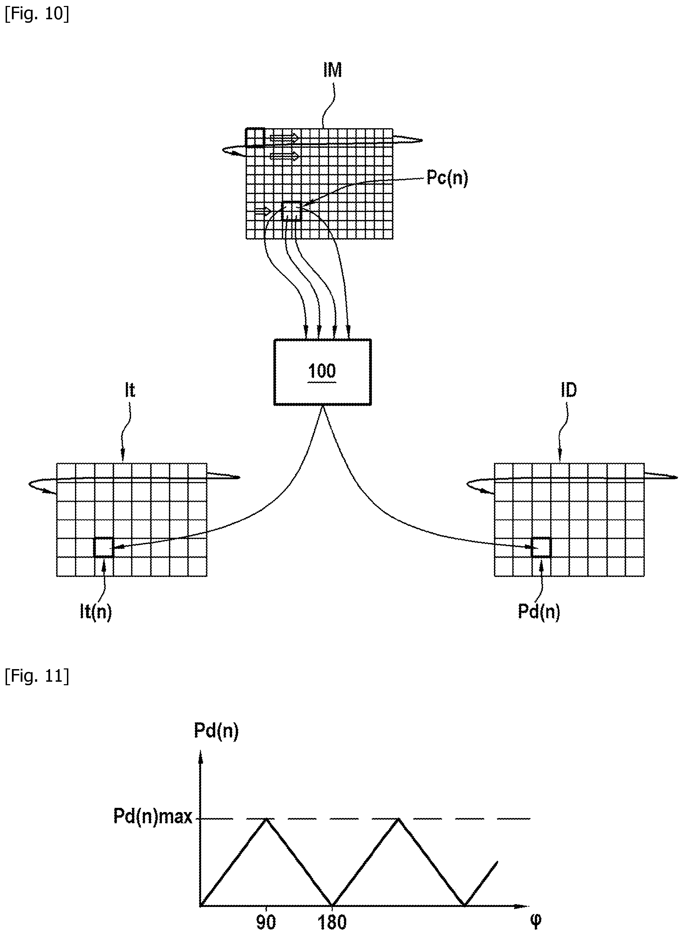

Comme illustré de manière schématique à la figure 8, le procédé comporte donc l'acquisition, supervisé par le système informatique 100, avec le capteur photoélectrique de la caméra polarimétrique 18, d'au moins une image numérique maîtresse IM du récipient 12 qui, au moment de l'acquisition, se trouve à l'emplacement d'analyse 13 du dispositif 10, cette image numérique maîtresse IM étant l'image de la lumière émergente émanant du récipient 12. On considère que l'image maîtresse IM a un nombre K*N de pixels maîtres correspondants à N groupes 26(n) distincts d'éléments photoélectriques contigus. Une image maîtresse IM est illustrée schématiquement à la figure 9 et à la figure 10.

Comme défini plus haut, on peut considérer que la même image maîtresse IM comprend N pixels composites Pc(n), chaque pixel composite Pc(n) étant un groupe de pixels maîtres Pm(f,n,k) contigus correspondant à un des groupes 26(n) d'éléments photoélectriques contigus 26(f,n,k), et chaque pixel composite Pc(n) étant considéré comme l'image d'une zone élémentaire du champ image, donc du récipient 12.

Par ailleurs, comme illustré plus particulièrement à la figure 9, on peut aussi considérer que l'image maîtresse IM comprend le nombre K d'images partielles IPk (avec k entier variant de 1 à K) distinctes ayant chacune N pixels partiels Ppk(n), les pixels partiels Ppk(n) de chaque image partielle IPk correspondant, pour une image partielle IPk donnée, à une seule famille d'éléments photoélectriques du capteur 22, et chaque pixel partiel étant pris dans un des N pixels composites. Un pixel partiel Ppk(n) d'une image partielle IPk est donc un pixel maître Pm(f,n,k) de l'image maîtresse IM acquise par la caméra polarimétrique 18.

Le procédé peut ainsi comprendre l'extraction informatique des images partielles IPk à partir de l'image maîtresse IM. Chaque image partielle IPk recouvre la même zone imagée que la zone imagée dans l'image maîtresse IM, mais avec une résolution divisée par le nombre K d'éléments photoélectrique 26(f,n,k) dans un groupe 26(n) d'éléments photoélectrique 26(f,n,k) contigus tels que définis plus haut. Chaque image partielle IPk comporte donc le même nombre N de pixels.

On note que les images partielles IPk n'étant autres que des sous-ensembles de l'image maîtresse IM, elles n'ont pas nécessairement besoin d'être extraites et traitées en tant que telles dans le système informatique, au sens par exemple qu'elles n'ont pas besoin d'être enregistrées séparément de l'image maîtresse IM. En d'autres termes, les images partielles IPk peuvent être mises en œuvre en tant que simples sous-ensembles de l'image maîtresse IM. Les pixel partiels Ppk(n) sont en effet mémorisés dans l'image maîtresse IM, leurs positions ou adresse mémoire dans l'image maîtresse IM étant connues. Comme illustré figure 10, pour chaque pixel composite Pc (n) l'unité de calcul informatique 100 calcule un pixel intensité Pt(n) à partir d'au moins deux pixels partiels Ppk(n) et un pixel de déphasage Pd(n) à partir d'au moins un pixel partiel Ppk(n). Autrement dit, le procédé comprend l'analyse informatique des pixels composites Pc(n) stockés dans l'image maîtresse IM, d'où l'on obtient directement une image d'intensité It et une image de déphasage ID qui sont analysée pour trouver des défauts.

Dans une image partielle IPk donnée, tous les pixels partiels Ppk(n) correspondent à une seule famille d'éléments photoélectriques 26f du capteur photoélectrique 22, donc à une seule et même caractéristique d'analyse de polarisation du système d'analyse de polarisation. De manière avantageuse, les images partielles IPk sont superposables pixel à pixel. En effet, pour une zone élémentaire donnée du récipient 13, on sait que les différentes pixels maîtres Pm(f,n,k) du pixel composite Pc(n) correspondant à la zone élémentaire donnée sont répartis, sous la forme de pixels partiels Ppk(n), dans chaque image partielle IPk, avec un unique pixel maître Pm(f,n,k) du pixel composite Pc(n), sous la forme d'un pixel partiel Ppk(n), dans chaque image partielle IPk. Il est entendu ici que, à l'échelle de la résolution de l'image maîtresse IM, il existe un décalage entre deux images partielles IPk, décalage qui est connu en fonction du décalage connu entre les éléments photoélectriques 26(f,n,k) au sein d'un groupe 26(n). En revanche, à l'échelle de la résolution des images partielles Ipk, les images partielles IPk peuvent être considérées comme parfaitement et directement superposables, car deux pixels partiels Ppk(n) extraits du même pixel composite seront des images, certes partielles, d'une même zone élémentaire du champ imagé, donc du récipient 12.

Parmi les K images partielles IPk ainsi extraites, il y au moins un nombre F d'images partielles IPk qui, tout en couvrant la même zone imagée, sont acquises chacune avec une caractéristique d'analyse de polarisation distincte.

Les figures 9 et 10 illustrent schématiquement un procédé pouvant être mis en œuvre avec un dispositif comportant 4 familles 26f distinctes d'éléments photoélectriques. Dans un tel cas, d'une image maîtresse IM on peut extraire 4 images partielles IP1, formée de pixels partiels Pp1(n), IP2, formée de pixels partiels Pp2(n), IP3, formée de pixels partiels Pp3(n), et IP4, formée de pixels partiels Pp4(n).

Par exemple, dans le cas d'un capteur ayant des groupes 26(n) d'éléments photoélectriques tels qu'illustrés à la figure 4, les images partielles IP1 et IP3 correspondent à deux caractéristiques d'analyse de polarisation qui sont deux analyses linéaires d'axes de polarisation A1 et A3 orthogonaux, et les images partielles IP2 et IP4 correspondent à deux caractéristiques d'analyse de polarisation qui sont deux analyses linéaires d'axes de polarisation A2 et A4 orthogonaux, décalés angulairement des deux précédents axes de polarisation orthogonaux A1 et A3

Dans le cas d'un capteur ayant des groupes 26(n) d'éléments photoélectriques tels qu'illustrés à la figure 5 ou à la figure 6, les images partielles IP1 et IP3 correspondent à deux caractéristiques d'analyse de polarisation qui sont deux analyses circulaires de sens inverses l'un de l'autre R1 et R2. Dans le cas d'un capteur ayant des groupes 26(n) d'éléments photoélectriques tels qu'illustrés à la figure 5, les images partielles IP2 et IP4 correspondent à deux caractéristiques d'analyse de polarisation qui sont deux analyses linéaires d'axes de polarisation A2 et A4 orthogonaux. Dans le cas d'un capteur ayant des groupes 26(n) d'éléments photoélectriques tels qu'illustrés à la figure 6, les images partielles IP2 et IP4 correspondent à deux caractéristiques d'analyse de polarisation qui sont deux analyses elliptiques E2, E4 orthogonales entre elles.

Cependant, pour au moins certains de ses modes de réalisation, l'invention pourrait être mise en œuvre avec seulement deux familles 26f distinctes d'éléments photoélectriques, de sorte que l'on obtiendrait seulement deux images partielles correspondant à deux caractéristiques d'analyse de polarisation qui seraient deux analyses linéaires d'axes de polarisation orthogonaux, ou, de préférence, seulement deux images partielles correspondant à deux caractéristiques d'analyse de polarisation qui seraient deux analyses circulaires de sens inverses l'un de l'autre.

**EP 4 413 356 B1**

A partir de ces images partielles IPk extraites d'une même image maîtresse IM, le procédé comprend le calcul informatique, par le système informatique 100, d'une image d'intensité It composée de pixels d'intensités It(n) calculés informatiquement à partir d'au moins deux pixels partiels Ppk(n) appartenant à deux images partielles IPk distinctes et extraits du même pixel composite Pc(n). Bien entendu, les deux pixels partiels Ppk(n) appartenant aux deux images partielles distinctes IPk sont deux pixels partiels superposables qui, dans leur image partielle IPk respective, occupent la même position, de sorte qu'ils sont chacun l'image, certes partielle, de la même zone élémentaire du champ imagé, notamment du récipient 12. Plus précisément, la valeur de chaque pixel d'intensité It(n) d'une image d'intensité It est une valeur moyennée de la valeur d'au moins deux pixels partiels correspondant à deux éléments photoélectriques d'un même groupe mais appartenant à deux familles distinctes d'éléments photoélectriques dont les caractéristiques d'analyse de polarisation sont deux analyses circulaires de sens inverses ou deux analyses linéaires d'axes de polarisation orthogonaux ou deux analyses elliptiques orthogonales entre elles. Dans le présent texte, une valeur moyennée peut être par exemple une moyenne arithmétique ou autre, pondérée ou pas, etc.... Par exemple, une valeur moyennée de deux valeurs peut être la somme de ces deux valeurs.

Dans une version la plus simple, l'image d'intensité It est composée de pixels d'intensités It(n) calculés informatiquement à partir de seulement deux pixels partiels Pt(n) appartenant à seulement deux images partielles IPk distinctes, ces images partielles distinctes correspondant à deux analyses circulaires de sens inverses l'un de l'autre ou deux analyses linéaires d'axes de polarisation orthogonaux ou deux analyses elliptiques orthogonales entre elles. Dans ce cas, si le dispositif ne comporte que 2 familles 26f distinctes d'éléments photoélectriques, la valeur de chaque pixel d'intensité vaut par exemple Pt(n)=Pp1(n) + Pp3(n) ou Pt(n)=Pp2(n) + Pp4(n).

Cependant, dans les modes de réalisation dans lesquels on dispose d'au moins quatre familles distinctes d'éléments photoélectriques, notamment tel que décrit en référence aux figures 3 à 7, on pourra calculer informatiquement chaque pixel d'intensité en tant que valeur moyennée des 4 valeurs, par exemple de la manière suivantes Pt(n)=Pp1(n) + Pp3(n) + Pp2(n) + Pp4(n).

Toujours dans de tels modes de réalisation dans lesquels on dispose d'au moins quatre familles distinctes d'éléments photoélectriques, on pourra calculer informatiquement une première image d'intensité intermédiaire It1 et une seconde image d'intensité intermédiaire It2, chacune selon le principe ci-dessus mais sur la base de deux couples distincts d'images partielles et ensuite établir une image finale d'intensité en tant que valeur moyennée des deux images d'intensité intermédiaires It1 et It2 de la manière qui est illustrée à la figure 9.

Dans les modes de réalisation dans lesquels on dispose d'au moins quatre familles distinctes d'éléments photoélectriques, notamment tel que décrit en référence aux figures 3 à 7, on pourra calculer informatiquement directement une image d'intensité dans laquelle chaque pixel d'intensité Pt(n) est une valeur moyennée de la valeur des quatre partiels appartenant à un même pixel composite, donc correspondant à quatre éléments photoélectriques d'un même groupe mais appartenant à quatre familles distinctes d'éléments photoélectriques dont les caractéristiques d'analyse de polarisation sont respectivement deux couples distincts de caractéristiques d'analyse de polarisation, chaque couple distinct de polarisation étant choisi parmi un ou plusieurs couples de deux analyses circulaires de sens inverses l'un de l'autre, un ou plusieurs couples de deux analyses linéaires d'axes de polarisation orthogonaux, et/ou un ou plusieurs couples de deux analyses elliptiques orthogonales entre elles.

Théoriquement, deux pixels dont la valeur respective résulte de deux analyses linéaires selon des axes orthogonaux l'un à l'autre représentent les deux composantes complémentaires de lumière et leur somme restitue l'intensité totale. De même, théoriquement, deux pixels dont la valeur respective résulte de deux analyses circulaires de sens inverses l'un de l'autre représentent les deux composantes complémentaires de lumière et leur somme restitue l'intensité totale. De même, théoriquement, deux pixels dont la valeur respective résulte de deux analyses elliptiques orthogonales représentent les deux composantes complémentaires de lumière et leur somme restitue l'intensité totale. Donc, dans l'hypothèse où l'on utilise la valeur de deux couples distincts de pixels partiels d'un même groupe d'analyse, chaque pixel du couple résultant de deux analyses circulaires de sens inverses l'un de l'autre, ou de deux analyses linéaires d'axes de polarisation orthogonaux, ou de deux analyses elliptiques orthogonales entre elles, la formule Pt(n) = Pp1(n) + Pp2(n) + Pp3(n) + Pp4(n) représente le double de l'intensité. Bien entendu il est possible de normaliser cette valeur en la divisant par 2.

Bien entendu, chaque pixel d'intensité Pt(n) est une image de la même zone élémentaire du champ image que celle des pixels partiels utilisés dans le calcul de la valeur moyennée.

En d'autres termes, dans l'exemple décrit, chaque pixel d'intensité Pt(n) est une valeur moyennée d'un pixel composite Pc(n) auquel il correspond.

Dans tous les cas, les images d'intensité ainsi obtenues sont des images pour lesquelles on récupère, pour chaque zone élémentaire du champ imagé, une valeur représentative de l'intensité de la lumière émergente émanant de cette zone élémentaire, quelle que soit la polarisation effective de la lumière émergente émanant de cette zone élémentaire. Si cette lumière émergente émanant de la zone élémentaire présente une polarisation, le ou les couples d'images partielles utilisés permettent d'obtenir, par la valeur moyennée, une valeur représentative, alors, que, dans chaque image partielle, cette polarisation pourra conduire à une atténuation plus ou moins forte en fonction du rapport entre la polarisation effective de la lumière émergente et la caractéristique d'analyse de polarisation associé à l'image partielle IPk considérée.

Le procédé comporte par ailleurs le calcul informatique d'au moins une image de déphasage ID, en calculant, pour une série de pixels composites Pc(n), un pixel de déphasage Pd(n) qui correspond à un pixel composite Pc(n) et dont la valeur est représentative d'un déphasage de polarisation $\varphi(n)$, induit par une contrainte mécanique résiduelle dans la zone élémentaire du récipient correspondant au pixel composite Pc(n), dans la lumière émergente émanant de cette zone élémentaire du récipient correspondant au pixel composite Pc(n). La valeur d'un pixel de déphasage Pd(n) qui correspond à un pixel composite Pc(n) est donc représentative de la différence entre d'une part le déphasage entre deux composantes orthogonales du champ électrique de la lumière incidente, et d'autre part le déphasage entre ces deux composantes orthogonales du champ électrique de la lumière émergente, pour la zone élémentaire du récipient correspondant au pixel composite Pc(n). On comprend que la valeur d'un pixel de déphasage Pd(n) est donc une image de l'intensité des contraintes mécaniques résiduelles dans le matériau de la zone élémentaire du récipient correspondant au pixel composite Pc(n).

La valeur de chaque pixel de déphasage Pd(n), pour une zone élémentaire donnée définie par l'indice (n), est calculée à partir de la valeur d'un ensemble d'un ou plusieurs pixel(s) partiel(s) Ppk(n) extraits tous du pixel composite Pc(n) image de ladite zone élémentaire, et appartenant à une combinaison d'une ou plusieurs images partielles Ppk(n). Le calcul informatique de chaque pixel de déphasage Pd(n) d'une image de déphasage donnée est effectué, pour tous les pixels de déphasage Pd(n) d'une image de déphasage donnée, à partir de la même combinaison d'une ou plusieurs images partielles IPk.

Plusieurs variantes sont possibles pour le calcul de l'image d'intensité It et pour le calcul de l'image de déphasage ID, notamment en fonction du dispositif 10, plus particulièrement en fonction des caractéristiques d'analyse de polarisation obtenues en utilisant le dispositif, et aussi en fonction de la polarisation de la lumière incidente. On va d'abord décrire ces différentes séries de variantes de calcul de l'image de déphasage ID avant de décrire comment l'image d'intensité It et l'image de déphasage ID sont utilisées dans le procédé.

Une première série de variantes du procédé opto-informatique d'analyse pourra être mise en œuvre dans les cas où le capteur photoélectrique 22 mis en œuvre pour l'acquisition de l'image maîtresse IM comprend au moins deux familles 26f distinctes d'éléments photo-électriques dont les caractéristiques d'analyse de polarisation sont deux analyses linéaires, par exemple respectivement selon un premier axe de polarisation A1 et un troisième axe de polarisation A3 orthogonal au premier axe de polarisation A1. Bien entendu, il pourra être mis en œuvre dans le cas de capteurs comportant plus de familles 26f distinctes d'éléments photo-électriques, avec d'autres caractéristiques d'analyse de polarisation, par exemple avec des capteurs ayant les configurations des figures 3 à 5, mais certaines de ces familles pourront alors rester non utilisées.

Dans cette première série de variantes du procédé, on fera en sorte que la lumière incidente soit polarisée linéairement selon le deuxième axe de polarisation A3.

On obtient et on utilise ainsi au moins une première image partielle IP1 associée à l'analyse de polarisation selon le premier axe de polarisation A1, formée des pixels Pp1(n), et une deuxième image partielle IP3 associée à l'analyse de polarisation selon le deuxième axe de polarisation A3, formée des pixels Pp3(n).

Dans cette première série de variantes du procédé opto-informatique d'analyse, le calcul informatique de chaque pixel de déphasage Pd(n) pour une image de déphasage ID donnée est effectué à partir de la valeur d'au moins le pixel partiel Pp1(n) correspondant au premier axe de polarisation, c'est-à-dire le pixel partiel qui correspond au pixel composite Pc(n) et qui figure dans une première image partielle IP1 associée à l'analyse de polarisation selon le premier axe de polarisation perpendiculaire à l'axe de polarisation A3 de la lumière incidente. Par exemple chaque pixel de déphasage Pd(n) vaut la valeur du pixel partiel Pp1(n) correspondant au premier axe de polarisation, avec donc : Pd(n) = Pp1(n).

On comprend ici que la valeur du pixel partiel Pp1(n) correspondant au premier axe de polarisation sera, en l'absence de contrainte dans le matériau traversé, une valeur nulle. En effet, la lumière incidente est polarisée linéairement selon l'orientation du deuxième axe de polarisation (ici l'axe A3), mais on ne retient, dans la lumière première image partielle IP1 associée à la caractéristique d'analyse de polarisation selon le premier axe de polarisation (ici l'axe A1), que la lumière polarisée perpendiculairement à la polarisation de lumière incidente. Si celle-ci n'a pas subi, dans une zone élémentaire du matériau, un déphasage induit par des contraintes mécaniques résiduelles, la lumière émergente émanant de cette zone élémentaire aura la même polarisation que la lumière incidente, de sorte que le pixel correspondant Pp1(n) aura une valeur nulle correspondant à une intensité lumineuse nulle.

On note ici que cette première série de variantes du procédé présente des limites. En effet, la relation entre d'une part la valeur du pixel de déphasage Pd(n), qui vaut la valeur du pixel partiel Pp1(n) correspondant au premier axe de polarisation, et d'autre part la valeur du déphasage de polarisation $\varphi(n)$, dépend aussi de l'orientation des contraintes résiduelles. En effet, la valeur maximale prise par le pixel de déphasage Pd(n) dépend de l'orientation de la contrainte résiduelle par rapport à l'orientation de l'axe de polarisation de la lumière incidente et, en corollaire, celle du capteur. Cependant, en dépit de ces limitations, cette première série de variantes du procédé peut s'avérer suffisante pour certaines applications, par exemple pour détecter des contraintes mécaniques résiduelles dès que le déphasage dépasse un seuil, lequel est inférieur à 90°, mais sans possibilité de discrimination sur la valeur de déphasage lorsque celle-ci est au-dessus de 90°. Le caractère anisotrope de cette détection n'est pas nécessairement trop gênant dans la mesure où, autour d'un défaut donné tel qu'une inclusion de corps étranger, on trouvera différentes orientations pour les contraintes mécaniques résiduelles générées autour du défaut, de sorte, qu'il y aura toujours certaines orientations de ces contraintes mécaniques résiduelles qui seront détectables, à défaut d'être mesurables.

Toujours dans cette première série de variantes du procédé opto-informatique d'analyse, la valeur de chaque pixel d'intensité Pt(n) de l'image d'intensité IT(n) est une valeur moyennée de la valeur de deux pixels partiels Pp1(n), Pp3(n) extraits du même pixel composite Pc(n) et associés chacun à l'une des deux familles dont les axes de polarisation linéaire sont orthogonaux, et/ou, dans les variantes de cette première série où l'on disposerait en plus de deux images partielles IP2, IP4 associées à deux autres analyses linéaires orthogonales, de deux pixels partiels Pp2(n), Pp4(n) associés chacun à une de deux familles distinctes d'éléments photo-électriques dont les caractéristiques d'analyse de polarisation sont deux analyses linéaires orthogonales.

Dans cette première série de variantes du procédé opto-informatique d'analyse, la valeur de chaque pixel d'intensité Pt(n) de l'image d'intensité IT(n) peut être calculée par exemple sous l'un ou l'autre des formes suivantes :

$$Pt(n) = Pp1(n) + Pp3(n),$$

ou

$$Pt(n) = Pp2(n) + Pp4(n),$$

ou

$$Pt(n) = [Pp1(n) + Pp2(n) + Pp3(n) + Pp4(n)] / 2$$

(le facteur ½ est optionnel, mais permet de normaliser la valeur).

Une deuxième série de variantes du procédé opto-informatique d'analyse pourra être mise en œuvre dans les cas où le capteur photoélectrique 22 mis en œuvre pour l'acquisition de l'image maîtresse IM comprend au moins quatre familles distinctes d'éléments photo-électriques dont les caractéristiques d'analyse de polarisation comprennent au moins quatre analyses linéaires selon des axes de polarisations comprenant deux paires d'axes de polarisation orthogonaux, les deux paires d'axes de polarisation étant décalées l'une de l'autre de 45 degrés d'angle. Le capteur photoélectrique 22 est par exemple un de ceux mis en œuvre dans les caméras photoélectriques commercialement disponibles et décrit plus haut. Un tel capteur photoélectrique présente donc des groupes 26(n) d'éléments photo-électriques tels qu'illustré à la figure 4.

Dans cette deuxième série de variantes du procédé, on fera en sorte que la lumière incidente soit polarisée circulairement dans un sens d'incidence.

On obtient et on utilise ainsi au moins quatre images partielle IP1, IP2, IP3, IP4, formée des pixels respectivement Pp1(n), Pp2(n), Pp3(n), et Pp4(n), qui sont chacune associée à la caractéristique d'analyse de polarisation selon respectivement un premier axe de polarisation A1, ayant une orientation arbitraire Oref, un deuxième axe de polarisation A2 ayant une orientation Oref + 45°, un troisième axe de polarisation A3 ayant une orientation Oref +90° et un quatrième axe de polarisation A4 ayant une orientation Oref + 135°.

Dans cette deuxième série de variantes du procédé opto-informatique d'analyse, le calcul informatique de chaque pixel de déphasage Pd(n) pour une image de déphasage ID donnée est effectué à partir des valeurs des quatre pixels partiels Pp1(n), Pp2(n), Pp3(n), et Pp3(n) associés chacun à une des quatre familles distinctes d'éléments photo-électriques dont les caractéristiques d'analyse de polarisation sont lesdites quatre analyses linéaires.

De ces images, on peut déterminer les paramètres de Stokes pour la lumière émergente émanant d'une zone élémentaire du champ imagé, donc d'une zone élémentaire du récipient. On donne ici à titre d'exemple une formule de calcul qui est valable au moins lorsque le polariseur circulaire source 16b comporte un polariseur linéaire 16b1 dont l'axe de polarisation est orienté à 45° de l'axe rapide d'une lame à retard quart d'onde source 16b2 qui est située en aval du polariseur linéaire 16b1 dans le sens de propagation de la lumière incidente :

$$\begin{bmatrix} S0 \\ S1 \\ S2 \\ S3 \end{bmatrix} = \begin{bmatrix} Pp1(n) + Pp3(n) \\ Pp1(n) - Pp3(n) \\ Pp2(n) - Pp4(n) \\ \sqrt{S0^2 - S1^2 - S2^2} \end{bmatrix}$$

Par ailleurs, on sait aussi exprimer, dans le contexte d'un dispositif tel qu'illustré ci-dessous, les paramètres de Stokes en fonction de la valeur de déphasage · sous la forme suivante :

$$\begin{bmatrix} S0 \\ S1 \\ S2 \\ S3 \end{bmatrix} = \begin{bmatrix} 1 \\ \sin(2\theta)\sin(\varphi) \\ -\cos(2\theta)\sin(\varphi) \\ -\cos(\varphi) \end{bmatrix}$$

De ce fait, on peut notamment exprimer la valeur du pixel de déphasage Pd(n) représentatif du déphasage de polarisation $\varphi(n)$ par exemple sous la forme de l'une ou l'autre des deux formules suivantes :

Selon une première formule

$$\varphi(n) = Pd(n) = \arcsin\left(\sqrt{S_1^2 + S_2^2}\right)$$

Cette formule peut s'écrire, en fonction des valeurs de pixels partiels:

$$\varphi(n) = Pd(n) = \arcsin\left(\sqrt{(Pp1(n) - Pp3(n))^2 + (Pp2(n) - Pp4(n))^2}\right)$$

Cette formule peut encore s'écrire, en fonction des valeurs de pixels maitres

$$\varphi(n) = Pd(n) = \arcsin\left(\sqrt{(Pm(1,n) - Pm(3,n))^2 + (Pm(2,n) - Pm(4,n))^2}\right)$$

Selon une deuxième formule :

$$\varphi(n) = Pd(n) = \arccos(S3)$$

Ces deux méthodes de calcul permettent de calculer la valeur de déphasage de polarisation $\varphi(n)$, mais seulement pour des valeurs de déphasage de polarisation $\varphi(n)$ inférieures à 90°. On voit en effet sur la figure 11 que la valeur du pixel de déphasage Pd(n) est une fonction bijective proportionnelle, ici croissante, du déphasage de polarisation $\varphi(n)$ pour des valeurs de déphasage de polarisation allant de 0 à 90 degrés d'angle, en passant de 0 à une valeur maximale Pd(n)max sur cette plage, mais que la valeur du pixel de déphasage Pd(n) décroit ensuite de la valeur maximale Pd(n)max à 0 pour des valeurs de déphasage de polarisation $\varphi(n)$ allant de 90 à 180 degrés d'angle, avant de croître à nouveau ensuite de 0 à la valeur maximale Pd(n)max pour des valeurs de déphasage de polarisation $\varphi(n)$ allant de 180 à 270 degrés d'angle, etc..., de manière périodique. En effet, dans la première formule, on calcule un arcsinus d'une racine carrée. La mesure de $\varphi(n)$ est une fonction triangle de ·(n), c'est-à-dire que pour $\varphi(n)$ variant de 0 à 90° on obtient effectivement $\varphi(n)$, et pour $\varphi(n)$ variant de 90° à 180° on obtient en réalité la valeur (180°- $\varphi(n)$). En revanche, sur la plage allant de 0 à 90° des valeurs de déphasage de polarisation, cette deuxième série de variantes du procédé permet d'obtenir la valeur de déphasage de polarisation de manière indépendante de l'orientation du défaut.

Toujours dans cette deuxième série de variantes du procédé opto-informatique d'analyse, la valeur de chaque pixel d'intensité Pt(n) de l'image d'intensité IT(n) est par exemple une valeur moyennée d'au moins deux pixels partiels associés chacun à deux familles distinctes d'éléments photo-électriques dont les caractéristiques d'analyse de polarisation sont deux analyses linéaires d'axes de polarisation orthogonaux.

Dans cette deuxième série de variantes du procédé opto-informatique d'analyse, la valeur de chaque pixel d'intensité Pt(n) de l'image d'intensité IT(n) peut être calculée par exemple sous l'un ou l'autre des formes suivantes :

$$Pt(n) = Pp1(n) + Pp3(n),$$

ou

$$Pt(n) = Pp2(n) + Pp4(n),$$

ou

$$Pt(n) = [Pp1(n) + Pp3(n) + Pp2(n) + Pp4(n)] / 2$$

(le facteur ½ est optionnel, mais permet de normaliser la valeur).

Une troisième série de variantes du procédé opto-informatique d'analyse pourra être mise en œuvre dans les cas où la lumière incidente est polarisée circulairement dans un sens d'incidence, et où le capteur photoélectrique 22 comprend au moins une famille 26f d'éléments photo-électriques dont la caractéristique d'analyse de polarisation est une analyse circulaire de sens inverse du sens d'incidence.

Dans cette troisième série de variantes du procédé, le calcul informatique de chaque pixel de déphasage pour une image de déphasage donnée est effectué à partir d'au moins la valeur du pixel partiel associé à la famille dont l'analyse circulaire est de sens inverse du sens d'incidence.

Par ailleurs, la valeur de chaque pixel d'intensité de l'image d'intensité est une valeur moyennée de deux pixels partiels associés chacun à l'une de deux familles dont les analyses circulaires sont de sens inverses l'un de l'autre et/ou de deux pixels partiels associés chacun à une de deux familles distinctes d'éléments photo-électriques dont les caractéristiques d'analyse de polarisation sont deux analyses linéaires d'axes de polarisation orthogonaux ou deux analyses elliptiques orthogonales entre elles.

Dans cette troisième série de variantes du procédé, on pourra par exemple utiliser un capteur photoélectrique ayant uniquement deux familles 26f d'éléments photo-électriques dont les caractéristiques d'analyse de polarisation respectives sont des analyses circulaires de sens inverses l'un de l'autre, ou utiliser uniquement ces deux familles d'un capteur ayant d'autres familles 26f d'éléments photo-électriques, comme par exemple avec les configurations illustrées aux figures 5 et 6. On pourra utiliser un capteur photoélectrique ayant une famille 26f d'éléments photo-électriques dont la caractéristique d'analyse de polarisation est une analyse circulaire de sens inverse du sens d'incidence, et deux familles 26f d'éléments photo-électriques dont les caractéristiques d'analyse de polarisation respectives sont des analyses linéaires d'axes de polarisation orthogonaux ou des analyses elliptiques orthogonales entre elles, ou utiliser uniquement ces trois familles d'un capteur ayant d'autres familles 26f d'éléments photo-électriques.

Dans cette troisième série de variantes du procédé, on pourra bien entendu utiliser un capteur photoélectrique 22 ayant des groupes 26(n) d'éléments photo-électriques tels qu'illustrés à la figure 5 ou à la figure 6. Dans ce cas d'un capteur photoélectrique 22 ayant des groupes 26(n) d'éléments photo-électriques tels qu'illustrés à la figure 5 ou à la figure 6, nous prendrons l'exemple dans lequel on obtient et on utilise ainsi :

- une image partielle IP1 associée à la caractéristique d'analyse circulaire de sens inverse du sens d'incidence, formée des pixels Pp1(n) ;
- une image partielle IP2 associée soit, pour le cas de la configuration de la figure 5, à la caractéristique d'analyse de polarisation selon un premier axe de polarisation, ici l'axe A2, soit, pour le cas de la configuration de la figure 6, à une première analyse elliptique, ici E2 ; l'image partielle IP2 étant formée des pixels Pp2(n)
- une image partielle IP4 associée soit, pour le cas de la configuration de la figure 5, à la caractéristique d'analyse de polarisation selon un autre axe de polarisation, ici l'axe A4, perpendiculaire au premier axe de polarisation qui est ici l'axe A2, soit, pour le cas de la configuration de la figure 6, à une autre analyse elliptique, ici E4, orthogonale à la première analyse elliptique E2, l'image partielle IP3 étant formée des pixels Pp4(n).

Avec ces conventions, chaque pixel de déphasage pour une image de déphasage donnée est calculé à partir d'au moins la valeur du pixel partiel Pp1(n) associé à la famille dont l'analyse circulaire est de sens inverse du sens d'incidence. Cette famille, dans laquelle sont extraites les valeurs de pixel pour le calcul de l'image de déphasage, est la famille pour laquelle, en l'absence de contrainte mécanique résiduelle, la valeur des pixels de de cette famille est nulle. Autrement dit, l'image partielle à partir des pixels de laquelle on pourra calculer l'image de déphasage est celle pour laquelle, en l'absence de contrainte mécanique résiduelle, l'image partielle est noire.

Par exemple chaque pixel de déphasage Pd(n) vaut la valeur du pixel partiel Pp1(n) correspondant à l'analyse circulaire de sens inverse du sens d'incidence, avec donc : Pd(n) = Pp1(n). Toujours avec ces conventions pour cette troisième série de variantes du procédé opto-informatique d'analyse, la valeur de chaque pixel d'intensité Pt(n) de l'image d'intensité IT(n) peut donc être calculée par exemple sous la forme suivante :

$$Pt(n) = Pp2(n) + Pp4(n),$$

ou, comme expliqué plus haut, notamment si on utilise un capteur photoélectrique 22 ayant des groupes 26(n) d'éléments photo-électriques tels qu'illustrés à la figure 5 ou à la figure 6, l'image d'intensité IT(n) peut aussi être calculée par exemple sous la forme suivante :

$$Pt(n) = Pp1(n) + Pp4(n),$$

ou encore

$$Pt(n) = [Pp1(n) + Pp4(n) + Pp2(n) + Pp4(n)] / 2.$$

On notera qu'un capteur photoélectrique 22 ayant des groupes 26(n) d'éléments photo-électriques tels qu'illustrés à la figure 6, peut être obtenu en utilisant un capteur photoélectrique dans lequel l'axe rapide de la lame retard commune est agencée à 45 degrés d'angle de l'axe de polarisation des filtres polarisants individuels 30(f,n,k) de la famille pour laquelle sont extraites les valeurs de pixel pour le calcul de l'image de déphasage.

Une quatrième série de variantes du procédé opto-informatique d'analyse pourra être mise en œuvre dans les cas où le capteur photoélectrique 22 mis en œuvre pour l'acquisition de l'image maîtresse IM comprend au moins deux familles distinctes d'éléments photo-électriques dont les caractéristiques d'analyse de polarisation sont cette fois-ci deux analyses circulaires de sens inverses, et où la lumière incidente est polarisée circulairement dans un sens d'incidence. On obtient ainsi au moins une image partielle IP1 associée à la caractéristique d'analyse circulaire selon le sens inverse du d'incidence, formée des pixels partiels Pp1(n), et une deuxième image partielle IP3 associée à la caractéristique d'analyse circulaire de sens correspondant au sens d'incidence, formée des pixels partiels Pp3(n).

Dans cette quatrième série de variantes du procédé opto-informatique d'analyse, le calcul informatique de chaque pixel de déphasage Pd(n) pour une image de déphasage ID donnée est effectué à partir de la valeur des deux pixels partiels Pp1(n) et Pp3(n) correspondants chacun à l'une des deux analyses circulaires de sens inverses l'un de l'autre.

De ces images, on peut déterminer les paramètres de Stokes pour la lumière émergente émanant d'une zone élémentaire du champ imagé, donc d'une zone élémentaire du récipient :

$$\begin{bmatrix} S0 \\ S1 \\ S2 \\ S3 \end{bmatrix} = \begin{bmatrix} Pp1(n) + Pp3(n) \\ Pp1(n) - Pp3(n) \\ Pp2(n) - Pp4(n) \\ \sqrt{S0^2 - S1^2 - S2^2} \end{bmatrix}$$

Cette formule est exprimée avec la convention décrites ci-dessus quatrième série de variantes. Notamment, avec cette convention, la valeur des pixels partiels Pp1(n) associés à la caractéristique d'analyse circulaire de sens inverse du sens d'incidence sera nulle en l'absence de contrainte mécanique résiduelle. Autrement dit, l'image partielle IP1 associée à la caractéristique d'analyse circulaire de sens inverse du sens d'incidence sera celle pour laquelle, en l'absence de contrainte mécanique résiduelle, l'image partielle est noire.

Par ailleurs, on sait aussi exprimer, dans le contexte d'un dispositif tel qu'illustré ci-dessous, les paramètres de Stokes en fonction de la valeur de déphasage · sous la forme suivante :

$$\begin{bmatrix} S0 \\ S1 \\ S2 \\ S3 \end{bmatrix} = \begin{bmatrix} 1 \\ -\cos(\varphi) \\ -\cos(2\theta)\sin(\varphi) \\ -\sin(2\theta)\sin(\varphi) \end{bmatrix}$$

De ce fait, on peut notamment exprimer la valeur du pixel de déphasage Pd(n) représentatif de la valeur de déphasage de polarisation $\varphi(n)$ par exemple sous l'une ou l'autre des deux formules suivantes :

Selon une première formule :

$$Pd(n) = \varphi(n) = 2\arctan\left(\sqrt{\frac{S0 + S1}{S0 - S1}}\right)$$

Cette formule peut encore s'écrire, en fonction des valeurs de pixels partiels ou en fonction des valeurs de pixels maitres :

$$Pd(n) = \varphi(n) = 2\arctan\left(\sqrt{\frac{Pp1(n)}{Pp3(n)}}\right) = 2\arctan\left(\sqrt{\frac{Pm(1,n)}{Pm(3,n)}}\right)$$

Selon une deuxième formule :

$$Pd(n) = \varphi(n) = \arccos(-S1) = \arccos(Pp3(n) - Pp1(n)) = \arccos(Pm(3,n) - Pm(1,n))$$

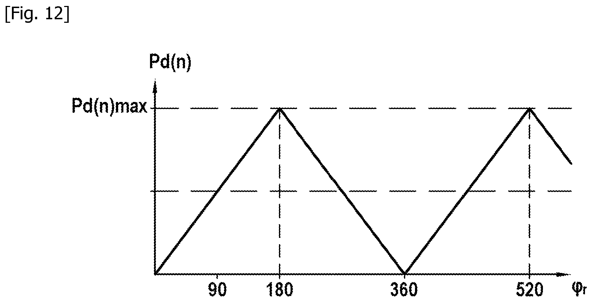

Ces deux méthodes de calcul permettent de calculer la valeur de déphasage, mais ici avantageusement pour des valeurs de déphasage de polarisation $\varphi(n)$ allant de 0° à 180°. En effet on calcule arccosinus d'un cosinus. On voit en effet sur la figure 12 que la valeur du pixel de déphasage Pd(n) déterminée par ces formules est une fonction bijective proportionnelle, ici croissante, du déphasage de polarisation $\varphi(n)$ réel pour des valeurs de déphasage de polarisation allant de 0 à 180 degrés d'angle, en passant de 0 à une valeur maximale Pd(n)max sur cette plage, mais que la valeur du pixel de déphasage Pd(n) décroit ensuite de la valeur maximale Pd(n)max à 0 pour des valeurs de déphasage de polarisation $\varphi(n)$ allant de 180 à 360 degrés d'angle, avant de recroitre à nouveau ensuite de 0 à la valeur maximale Pd(n) max pour des valeurs de déphasage de polarisation $\varphi(n)$ allant de 360 à 720 degrés d'angle, etc..., de manière périodique. La mesure de la valeur du pixel de déphasage Pd(n) par cette formule est dite une fonction triangle du déphasage de polarisation $\varphi(n)$ réel, c'est-à-dire que pour un déphasage de polarisation $\varphi(n)$ réel variant de 0 à 180° on mesure ·(n), et pour un déphasage de polarisation $\varphi(n)$ réel variant de 180° à 360°, on mesure (360°- $\varphi(n)$ ), . De cette manière, la détection des défauts générant des contraintes mécaniques résiduelles est améliorée et il est possible de discriminer les défauts par la valeur de déphasage de polarisation $\varphi(n)$ qu'ils produisent entre 0 et 180 degrés d'angle. C'est-à-dire qu'un défaut dont l'image comporte plusieurs pixels de déphasage approchant la valeur Pd(n)max contient des contraintes plus fortes qu'un défaut dont l'image dont les pixels de déphasage n'atteignent pas cette valeur (il peut contenir de portions avec un déphasage supérieur à 180° qui sera sous-estimé). La discrimination devient meilleure entre des contraintes de valeurs différentes, autrement dit il est plus aisé de rejeter ou conserver des défauts en fonction du stress : on peut rejeter des contrainte ayant produit un dephasage supérieur à 90° sans rejeter des contraintes ayant produit un déphasage inférieur à 90°, alors qu'avec une étendue des mesures limitée à 90° on doit rejeter des déphasages inférieurs à 90° pour être certain de rejeter ceux entre 90 et 180°. On observe également que la mesure entre 0 et 180 degrés est isotrope, car la valeur de déphasage de polarisation $\varphi(n)$ mesurée ne dépend pas de l'orientation des contraintes du défaut mais seulement de leur valeur.

Toujours dans cette quatrième série de variantes du procédé opto-informatique d'analyse, la valeur de chaque pixel d'intensité Pt(n) de l'image d'intensité IT(n) est une valeur moyennée de deux pixels partiels Pp1(n), Pp3(n), associés chacun à l'une des deux familles dont les analyses circulaires sont de sens inverses l'un de l'autre,
et/ou, dans les variantes de cette quatrième série où l'on disposerait en plus de deux images partielles IP2, IP4 associées à deux analyses linéaires selon des axes de polarisation A2, A4 orthogonaux (cf. cas de la figure 5), de deux pixels partiels Pp2(n), Pp4(n) associés chacun à une de deux familles distinctes d'éléments photo-électriques dont les caractéristiques d'analyse de polarisation sont deux analyses linéaires d'axes de polarisation A2, A4 orthogonaux, et/ou, dans les variantes de cette quatrième série où l'on disposerait en plus de deux images partielles IP2, IP4 associées à deux analyses elliptiques orthogonales (cf. cas de la figure 6), de deux pixels partiels Pp2(n), Pp4(n) associés chacun à une de deux familles distinctes d'éléments photo-électriques dont les caractéristiques d'analyse de polarisation sont deux analyses elliptiques orthogonales.

Dans cette quatrième série de variantes du procédé opto-informatique d'analyse, la valeur de chaque pixel d'intensité Pt(n) de l'image d'intensité IT(n) peut donc être calculée par exemple sous l'un ou l'autre des formes suivantes :

$$Pt(n) = Pp1(n) + Pp3(n),$$

ou

$$Pt(n) = Pp2(n) + Pp4(n),$$

ou

$$Pt(n) = Pp1(n) + Pp2(n) + Pp3(n) + Pp4(n).$$

Dans les deuxième et quatrième séries de variantes, le calcul de chaque pixel de déphasage, pour une image de déphasage donnée, est effectué à partir de la valeur d'au moins deux pixels partiels, les au moins deux pixels partiels étant extraits du même pixel composite et correspondant à au moins deux analyses linéaires d'axes de polarisation orthogonaux orthogonales ou au moins deux analyses circulaires de sens inverses l'un de l'autre.

Dans tous les cas ci-dessus, on aboutit donc grâce au procédé à l'obtention d'une image d'intensité It, qui est analogue à une image conventionnelle en transmission, et d'une image de déphasage ID, dans laquelle on peut au moins détecter, et dans certains cas mesurer, au moins de manière relative, les contraintes mécaniques résiduelles, au moyen d'une seule caméra.

Ainsi, sur cette base, on peut prévoir que le procédé d'analyse comprenne une étape de reconnaissance informatique, dans l'image d'intensité, d'un marqueur géométrique connu du récipient et la détermination de sa localisation dans l'image d'intensité. Un marqueur géométrique connu du récipient peut comprendre un ou plusieurs bords ou contours du récipient, et/ou une ou plusieurs gravure, inscription ou autre marquage du récipient, et/ou le centre de la piqûre de certains fonds. Cette étape de reconnaissance informatique, dans l'image d'intensité, d'un marqueur géométrique connu du récipient peut être conduite de manière habituelle par toutes les méthodes d'analyse d'image habituellement mises en œuvre, notamment celles mise en œuvre dans le cadre des procédés opto-informatiques d'analyse connus pour l'analyse des récipients en matériau transparent ou translucide tel que le verre. Par exemple, une phase de réglage permet d'enregistrer la signature du marqueur ou de saisir ses caractéristiques géométriques et/ou photométriques dans l'image d'intensité. Lors de la localisation, on recherche dans l'image la position et l'orientation vraisemblable du marqueur. On en déduit alors la position relative dans l'image des autres éléments en se basant sur le fait que la localisation du marqueur informe quant à la position relative du récipient 12 par rapport au capteur d'image 18 au moment de la capture. En ayant ainsi repéré, dans l'image d'intensité It, le marqueur géométrique connu, on devient capable de mettre en correspondance chaque pixel d'intensité Pt(n) de l'image d'intensité avec une localisation d'une zone élémentaire du récipient dont ce pixel d'intensité Pt(n) est l'image.

Or, par construction, on a vu que les images partielles IPk issues d'une même image maîtresse, et par conséquent la ou les images d'intensité It, et la ou les images de déphasage ID qui sont construites selon les différentes variantes du procédé, sont toutes superposables pixel à pixel, au sens que deux pixels partiels Ppk(n) extraits du même pixel composite seront des images, certes partielles, d'une même zone élémentaire du champ imagé, donc du récipient 12, et que les pixels d'intensité Pt(n) et les pixels de déphasage Pd(n) calculés sur la base de pixels maîtres ou partiels appartenant au même pixel composite (donc correspondant au même groupe 26(n) groupe d'éléments photoélectriques contigus), seront donc eux aussi associés à la même zone élémentaire du champ imagé, donc du récipient 12. Il y a donc un lien de localisation entre les pixels partiels, le pixel d'intensité, le pixel de déphasage et le pixel composite associés.

Aussi, en utilisant ce lien de localisation, dans leurs images respectives, entre les pixels partiels, le pixel d'intensité, le pixel de déphasage et le pixel composite associés, le procédé peut être prévu pour :

- d'une part assurer la détermination informatique d'au moins une région d'intérêt dans l'image de déphasage en fonction de la localisation du marqueur géométrique,
- et d'autre part assurer l'identification informatique de la présence d'une région stressée dans la région d'intérêt de l'image de déphasage.

La région d'intérêt dans l'image de déphasage peut correspondre à une zone particulière du récipient, par exemple tout ou partie du buvant, du goulot, de l'épaule, du corps, du fond, etc...du récipient. La région d'intérêt dans l'image de déphasage peut correspondre à une zone comportant un marquage, une gravure, un bossage, une géométrie particulière connue et identifiable. La région d'intérêt dans l'image de déphasage peut au contraire correspondre à une zone excluant tout marquage, toute gravure, et/ou tout bossage.

Plus généralement, la région d'intérêt dans l'image de déphasage correspond à une zone du récipient pour laquelle on veut analyser les contraintes mécaniques résiduelles. Si l'on détermine plusieurs régions d'intérêt dans l'image de déphasage, chacune peut correspondre à une zone du récipient pour laquelle on veut analyser les contraintes mécaniques résiduelles de manière différente que pour les autres régions d'intérêt, par exemple avec un critère de seuil différent.

L'identification informatique de la présence d'une région stressée dans la région d'intérêt de l'image de déphasage est avantageusement réalisée par une analyse informatique prenant en compte la valeur des pixels de déphasage et leur localisation relative par rapport au marqueur géométrique. Ici, les habituelles techniques d'analyse pourront être mises en œuvre, telles que des modifications générales ou locales de contraste, des segmentations en régions ou objets, des recherches de contours, des comparaisons de valeurs de pixels entre elles, des comparaisons de valeurs pixels à des valeurs références, des mesures de paramètres géométrique ou photométrique des anomalies détectées.

Le procédé opto-informatique d'analyse peut avantageusement comprendre la détermination informatique de la localisation relative de la région stressée sur le récipient par rapport au marqueur géométrique. Cette étape permet par exemple de savoir si la région stressée appartient à une région d'intérêt plus ou moins sensible, par exemple à une régions d'intérêt pour laquelle on va prévoir un seuil plus ou moins important de valeur de contrainte mécanique résiduelle pour décider par exemple de mettre un récipient au rebut, et de classer le récipient dans une classe de qualité inférieure. Par exemple également, le procédé opto-informatique d'analyse peut comprendre une étape informatique de classification de la région stressée qui prend en compte la localisation relative de la région stressée sur le récipient par rapport au marqueur géométrique, déterminée informatiquement, et une grandeur représentative d'un déphasage de polarisation $\varphi(n)$, induit par une contrainte mécanique résiduelle dans la région stressée, dans la lumière émergente émanant de la région stressée calculée informatiquement à partir des valeurs des pixels partiels correspondants à la région stressée.

Typiquement, le procédé opto-informatique d'analyse peut être conçu pour détecter informatiquement dans l'image maîtresse ou l'image d'intensité ou l'image de déphasage, des pixels candidats ou des régions candidates dont les valeurs sont en dehors d'un intervalle donné ou différentes de celles des pixels ou des régions voisines. Par exemple, on peut alors calculer informatiquement, pour chacun des pixels candidats ou des régions candidates, les valeurs des pixels d'intensité et les valeurs des pixels de déphasage correspondants, notamment selon l'un ou l'autre des variantes de réalisation décrites ci-dessus., Sur cette base, le procédé pourra être conçu pour classifier informatiquement chacun des pixels candidats ou des régions candidates en tant que défaut ou en tant que non défaut et/ ou les classifier informatiquement en défauts de différents types, par exemple parmi au moins un bouillon, ou une inclusion. Cette classification informatique sera avantageusement effectuée à partir des valeurs des pixels d'intensité, de déphasage et de la localisation relative par rapport au marqueur géométrique, donc en fonction de l'appartenance à des régions spécifiques du récipient, et compte tenu des variations de position relative du récipient par rapport à la caméra.

Par ailleurs, en plus de la détection et/ou de la mesure du déphasage de polarisation induit par d'éventuelles contraintes mécaniques résiduelles, le procédé opto-informatique d'analyse peut comporter l'étape de déterminer informatiquement, dans l'image d'intensité, des particularités optiques d'absorption ou réfraction du récipient pour détecter des défauts du récipient qui peuvent d'ailleurs générer ou pas des contraintes mécaniques résiduelles.

## Revendications

1. Procédé opto-informatique d'analyse en lumière traversante d'un récipient (12) en matériau transparent ou translucide tel que le verre à l'aide d'une caméra polarimétrique (18), la caméra polarimétrique comportant un capteur photoélectrique (22) bidimensionnel

   comprenant des éléments photoélectriques (26(f,n,k)) comprenant chacun une cellule photoélectrique (28(f,n,k)) devant laquelle est agencé un système d'analyse de polarisation comprenant au moins un analyseur de polarisation individuel (30(f,n,k)) associé à la cellule photoélectrique de cet élément photoélectrique, le capteur photoélectrique comportant un nombre N de groupes (26(n)) distincts d'éléments photoélectriques contigus, chaque groupe distinct d'éléments photoélectriques contigus comprenant un nombre K supérieur ou égal à deux d'éléments photoélectriques (26(f,n,k)) appartenant respectivement à l'une parmi un nombre F supérieur ou égal à deux de familles distinctes d'éléments photoélectriques (26(f,n,k)), chaque famille d'éléments photoélectriques étant définie par une caractéristique d'analyse de polarisation du système d'analyse de polarisation commune à chacun de ses éléments photoélectriques (26(f,n,k)), les caractéristiques d'analyse de polarisation des au moins deux familles comprenant au moins deux analyses linéaires selon deux axes de polarisation orthogonaux ou au moins deux analyses circulaires de sens inverse l'un de l'autre, chaque groupe (26(n)) distinct d'éléments photoélectriques comprenant au moins deux éléments photoélectriques (26(f,n,k)) appartenant à au moins deux familles distinctes, et chaque groupe distinct d'éléments photoélectriques contigus correspondant à un pixel composite (Pc(n)) dans une image maîtresse (IM) délivrée par le capteur, le procédé comportant :

      - l'illumination du récipient, par l'arrière, par un dispositif d'illumination (16) délivrant, sur le récipient, une lumière incidente polarisée, soit circulairement avec un premier sens de rotation, soit linéairement selon un axe de polarisation d'incidence ;
      - l'observation du récipient (12), par l'avant, par la caméra polarimétrique (18), de manière à recueillir, sur le capteur photoélectrique (22) de la caméra polarimétrique, une lumière émergente émanant du récipient ;
- l'acquisition, avec le capteur photoélectrique (22) de la caméra polarimétrique, d'au moins une image numérique maîtresse (IM) du récipient, ayant un nombre K*N de pixels maîtres (Pm(f,n,k)) correspondants à N groupes distincts d'éléments photoélectriques contigus, l'image maîtresse comprenant N pixels composites (Pc(n)), chaque pixel composite correspondant à un des groupes (26(n)) d'éléments photoélectriques contigus, et l'image maîtresse (IM) comprenant le nombre K d'images partielles distinctes (IPk) ayant chacune N pixels partiels (Ppk(n)), les pixels partiels (Ppk(n)) de chaque image partielle correspondant, pour une image partielle (IPk) donnée, à une seule famille d'éléments photoélectriques du capteur photoélectrique (22) pris dans les N pixels composites (Pc(n)) ;
- le calcul informatique d'une image d'intensité (It) dans laquelle la valeur de chaque pixel d'intensité (Pt(n)) est une valeur moyennée de la valeur d'au moins deux pixels partiels (Ppk(n)) correspondant à deux éléments photoélectriques d'un même groupe (26(n)) mais appartenant à deux familles distinctes d'éléments photoélectriques (26(f,n,k)) dont les caractéristiques d'analyse de polarisation sont deux analyses circulaires de sens inverses l'un de l'autre ou deux analyses linéaires d'axes de polarisation orthogonaux ou deux analyses elliptiques orthogonales ;
- le calcul informatique d'au moins une image de déphasage (ID) en calculant, pour une série de pixels composites, un pixel de déphasage (Pd(n)) qui correspond à un pixel composite (Pc(n)) et dont la valeur est représentative d'un déphasage de polarisation ($\varphi$(n)) induit, par une contrainte mécanique résiduelle dans la zone élémentaire du récipient (12) correspondant au pixel composite (Pc(n)), dans la lumière émergente émanant de la zone élémentaire du récipient correspondant au pixel composite (Pc(n)), à partir de la valeur d'un ensemble d'un ou plusieurs pixel(s) partiel(s) (Ppk(n)) tous extraits du pixel composite (Pc(n)) et appartenant à une combinaison d'une ou plusieurs images partielles (Ipk), le calcul informatique de chaque pixel de déphasage (Pd(n)) d'une image de déphasage (ID) donnée étant effectué à partir de la même combinaison d'une ou plusieurs images partielles (Ipk).

2. Procédé opto-informatique d'analyse selon la revendication 1, **caractérisé en ce que** :

- le capteur photoélectrique (22) comprend au moins deux familles distinctes d'éléments photo-électriques (26(f,n,k)) dont les caractéristiques d'analyse de polarisation sont deux analyses linéaires respectivement selon un premier axe de polarisation et second axe de polarisation orthogonal au premier axe de polarisation ;
- la lumière incidente est polarisée linéairement selon le deuxième axe de polarisation ;
- le calcul informatique de chaque pixel de déphasage (Pd(n)) pour une image de déphasage donnée est effectué à partir de la valeur d'au moins le pixel partiel (Ppk(n)) correspondant au premier axe de polarisation ;
- la valeur de chaque pixel d'intensité de l'image d'intensité est une valeur moyennée de la valeur de deux pixels partiels extraits du même pixel composite et associés chacun à l'une des deux familles dont les axes de polarisation sont orthogonaux et/ou de deux pixels partiels associés chacun à une de deux familles distinctes d'éléments photo-électriques dont les caractéristiques d'analyse de polarisation sont deux analyses circulaires de sens inverses l'un de l'autre.

3. Procédé opto-informatique d'analyse selon la revendication 1, **caractérisé en ce que** :

- le capteur photoélectrique (22) comprend au moins quatre familles distinctes d'éléments photo-électriques (26(f,n,k)) dont les caractéristiques d'analyse de polarisation comprennent au moins quatre analyses linéaires selon des axes de polarisations comprenant deux paires ((A1, A3), (A2, A4)) d'axes de polarisation orthogonaux, les deux paires d'axes de polarisation étant décalées l'une de l'autre de 45 degrés d'angle ;
- la lumière incidente est polarisée circulairement dans un sens d'incidence ;
- le calcul informatique de chaque pixel de déphasage (Pd(n)) pour une image de déphasage donnée est effectué à partir des valeurs des quatre pixels partiels (Ppk(n)) extraits du même pixel composite (Pc(n)) et associés chacun à une de quatre familles distinctes d'éléments photo-électriques dont les caractéristiques d'analyse de polarisation sont lesdites analyses linéaires ;
- la valeur de chaque pixel d'intensité (Pt(n)) de l'image d'intensité (It) est une valeur moyennée d'au moins deux pixels partiels (Ppk(n)) extraits du même pixel composite (Pc(n)) et associés chacun à deux familles distinctes d'éléments photo-électriques dont les caractéristiques d'analyse de polarisation sont deux analyses linéaires d'axes de polarisation orthogonaux.

4. Procédé opto-informatique d'analyse selon la revendication 1, **caractérisé en ce que** :

- la lumière incidente est polarisée circulairement dans un sens d'incidence ;

- le capteur photoélectrique (22) comprend au moins une famille d'éléments photo-électriques (26(f,n,k)) dont la caractéristique d'analyse de polarisation est une analyse circulaire de sens inverse du sens d'incidence ;
- le calcul informatique de chaque pixel de déphasage (Pd(n)) pour une image de déphasage (ID) donnée est effectué à partir d'au moins la valeur du pixel partiel (Ppk(n)) associé à la famille dont l'analyse circulaire est de sens inverse du sens d'incidence ;
- la valeur de chaque pixel d'intensité (Pt(n)) de l'image d'intensité (It) est une valeur moyennée de deux pixels partiels (Ppk(n)) extraits du même pixel composite (Pc(n)) et associés chacun à une de deux familles dont les analyses circulaires sont de sens inverses l'un de l'autre et/ou de deux pixels partiels (Ppk(n)) associés chacun à une de deux familles distinctes d'éléments photo-électriques dont les caractéristiques d'analyse de polarisation sont deux analyses linéaires d'axes de polarisation orthogonaux ou deux analyses elliptiques orthogonales.

5. Procédé opto-informatique d'analyse selon la revendication 1, **caractérisé en ce que** :

- le capteur photoélectrique (22) comprend au moins deux familles distinctes d'éléments photo-électriques (26(f,n,k)) dont les caractéristiques d'analyse de polarisation sont deux analyses circulaires de sens inverses l'un de l'autre ;
- la lumière incidente est polarisée circulairement ;
- le calcul informatique de chaque pixel de déphasage (Pd(n)) pour une image de déphasage (ID) donnée est effectué à partir de la valeur des deux pixels partiels (Ppk(n)) extraits du même pixel composite (Pc(n)) et correspondants chacun à l'une des deux analyses circulaires de sens inverses ;
- la valeur de chaque pixel d'intensité (Pt(n)) de l'image d'intensité (It) est une valeur moyennée de deux pixels partiels (Ppk(n)) extraits du même pixel composite (Pc(n)) et associés chacun à l'une des deux familles dont les analyses circulaires sont inverses l'un de l'autre et/ou de deux pixels partiels (Ppk(n)) extraits du même pixel composite (Pc(n)) et associés chacun à une de deux familles distinctes d'éléments photo-électriques dont les caractéristiques d'analyse de polarisation sont deux analyses linéaires d'axes de polarisation orthogonaux ou deux analyses elliptiques orthogonales.

6. Procédé opto-informatique d'analyse selon la revendication précédente, **caractérisé en ce que** la valeur d'un pixel de déphasage (Pd(n)) est une fonction bijective proportionnelle, du déphasage de polarisation ($\varphi$(n)) pour des valeurs de déphasage allant de 0 à 180 degrés d'angle.

7. Procédé d'analyse selon l'une quelconque des revendications précédentes, **caractérisé en ce qu'**il comprend le calcul informatique d'une image d'intensité dans laquelle chaque pixel d'intensité Pt(n) est une valeur moyennée de la valeur de plusieurs couples distincts de pixels partiels appartenant à un même pixel composite, chaque couple distinct de pixels partiels correspondant à un couple distinct de caractéristiques d'analyse de polarisation, chaque couple distinct de caractéristiques d'analyse de polarisation étant choisi parmi un ou plusieurs couples de deux analyses circulaires de sens inverses l'un de l'autre, un ou plusieurs couples de deux analyses linéaires d'axes de polarisation orthogonaux, et/ou un ou plusieurs couples de deux analyses elliptiques orthogonales entre elles.

8. Procédé d'analyse selon l'une quelconque des revendications précédentes, **caractérisé en ce qu'**il comprend :

- la reconnaissance informatique, dans l'image d'intensité (It), d'un marqueur géométrique connu du récipient (12) et la détermination de sa localisation dans l'image d'intensité ; et,

en utilisant le lien de localisation, dans leurs images respectives, entre les pixels partiels (Ppk(n)), le pixel d'intensité (Pt(n)) le pixel de déphasage (Pd(n)) et le pixel composite (Pc(n)) associés :

- d'une part la détermination informatique d'au moins une région d'intérêt dans l'image de déphasage en fonction de la localisation du marqueur géométrique,
- et d'autre part l'identification informatique de la présence d'une région stressée dans la région d'intérêt de l'image de déphasage.

9. Procédé d'analyse selon la revendication 8, **caractérisé en ce que** l'identification informatique de la présence d'une région stressée prend en compte la valeur des pixels de déphasage (PD(n)) et leur localisation relative par rapport au marqueur géométrique.

10. Procédé opto-informatique d'analyse selon l'une des revendications 8 ou 9, **caractérisé en ce qu'**il comprend la détermination informatique de la localisation relative de la région stressée sur le récipient par rapport au marqueur géométrique.

11. Procédé opto-informatique d'analyse selon l'une des revendications 8 à 10, **caractérisé en ce qu'**il comprend une étape informatique de classification de la région stressée qui prend en compte la localisation relative de la région stressée sur le récipient par rapport au marqueur géométrique, déterminée informatiquement, et une grandeur représentative d'un déphasage de polarisation ($\varphi(n)$), induit par une contrainte mécanique résiduelle dans la région stressée, dans la lumière émergente émanant de la région stressée, la grandeur représentative d'un déphasage de polarisation ($\varphi(n)$) étant calculée informatiquement à partir des valeurs des pixels partiels ($Ppk(n)$) correspondants à la région stressée.

12. Procédé opto-informatique d'analyse selon l'une des revendications précédentes, **caractérisé en ce que** la lumière incidente présente un spectre d'énergie compris entre 250 nm et 1000 nm et de largeur inférieure à 150nm, de préférence de largeur inférieure à 100 nm.

13. Procédé opto-informatique d'analyse selon l'une des revendications précédentes, **caractérisé en ce que** chaque groupe ($26(n)$) distinct d'éléments photoélectriques contigus ($26(f,n,k)$) comprend quatre éléments photoélectriques appartenant respectivement à l'une parmi quatre familles distinctes d'éléments photoélectriques, les caractéristiques d'analyse de polarisation des quatre familles comprenant quatre d'analyse linéaires selon des axes de polarisation comprenant deux paires d'axe de polarisation orthogonaux, les deux paires étant décalées l'une de l'autre de 45 degrés d'angle, dans un sens ou dans l'autre, et **en ce que** chaque groupe distinct d'éléments photoélectriques comprend un élément photoélectrique appartenant à chaque famille distincte.

14. Procédé opto-informatique d'analyse selon l'une des revendications précédentes, **caractérisé en ce que** le dispositif d'illumination (16) comprend une source lumineuse (16a) étendue dont les dimensions, perpendiculairement à un axe d'incidence allant de la source lumineuse vers le récipient (12), sont supérieures aux dimensions correspondantes de la partie à analyser du récipient.

15. Procédé opto-informatique d'analyse selon l'une des revendications précédentes, **caractérisé en ce que** l'on détermine informatiquement, dans l'image d'intensité (It), des particularités optiques d'absorption ou réfraction pour détecter des défauts du récipient (12).

16. Procédé opto-informatique d'analyse selon l'une des revendications précédentes, **caractérisé en ce que** l'on détecte informatiquement dans l'image maîtresse (IM) ou l'image d'intensité (It) ou l'image de déphasage (ID), des pixels candidats ou des régions candidates dont les valeurs sont hors d'un intervalle donné, ou différentes de celles des pixels ou des régions voisines, on calcule informatiquement pour chacun des pixels candidats ou des régions candidates les valeurs des pixels d'intensité ($Pt(n)$) et les valeurs des pixels de déphasage de polarisation ($Pd(n)$, $\varphi(n)$) correspondants, et on classifie informatiquement chacun des pixels candidats ou des régions candidates en tant que défaut ou en tant que non défaut et/ou on les classifie informatiquement en défauts de différents types parmi au moins un bouillon, ou une inclusion, à partir des valeurs des pixels d'intensité, des valeurs de déphasage de polarisation ($\varphi(n)$) et de la localisation relative par rapport au marqueur géométrique.

17. Dispositif d'analyse en lumière traversante de défauts dans un récipient en matériau transparent ou translucide tel que le verre :

    - comprenant un dispositif d'illumination (16) délivrant, sur un récipient (12) placé en un emplacement d'analyse (13) du dispositif (10), une lumière incidente polarisée circulairement avec un sens de rotation d'incidence ;
    - comprenant une caméra polarimétrique (18), la caméra polarimétrique comportant un capteur photoélectrique (22) bidimensionnel comprenant des éléments photoélectriques ($26(f,n,k)$) comprenant chacun une cellule photoélectrique ($28(f,n,k)$) devant laquelle est agencé un système d'analyse de polarisation comprenant au moins un analyseur de polarisation individuel ($30(f,n,k)$) associé à la cellule photoélectrique ($28(f,n,k)$) de cet élément photoélectrique ($26(f,n,k)$), le capteur photoélectrique (22) comportant un nombre N de groupes ($26(n)$) distincts d'éléments photoélectriques contigus ($26(f,n,k)$), chaque groupe distinct d'éléments photoélectriques contigus comprenant quatre éléments photoélectriques appartenant respectivement à quatre familles distinctes d'éléments photoélectriques, chaque famille d'éléments photoélectriques étant définie par une caractéristique d'analyse de polarisation de l'analyseur de polarisation individuel ($30(f,n,k)$) qui est commune à chacun de ses éléments photoélectriques ($26(f,n,k)$) ;
    - pour chacune des au moins 4 familles, les analyseurs de polarisation individuels ($30(f,n,k)$) associés à chacune des quatre familles sont des filtres polarisants linéaires, les filtres polarisants individuels ($30(f,n,k)$) correspondant à une famille ayant le même axe de polarisation (A1, A2, A3, A4), les axes de polarisation (A1, A2, A3, A4) étant distincts pour les 4 familles et les axes de polarisation (A1, A2, A3, A4) des filtres polarisants individuels (30(f,n,k)) correspondant aux 4 familles comprenant deux paires d'axes de polarisation orthogonaux, les deux paires étant décalées l'une de l'autre de 45 degrés d'angle, dans un sens ou dans l'autre ; et

- chaque groupe distinct d'éléments photo-électriques comprenant un élément photo-électrique (26(f,n,k)) appartenant à chaque famille distincte, **caractérisé, en ce que** le système d'analyse de polarisation comporte une lame (34) à retard quart d'onde de la lumière incidente, qui est interposée entre l'emplacement d'analyse (13) et les filtres polarisants individuels (30(f,n,k)), et dont l'axe rapide est agencé à 45 degrés d'angle de l'axe de polarisation des filtres polarisants individuels d'une des quatre familles, de sorte que les caractéristiques les filtres polarisants individuels (30(f,n,k)) de polarisation des quatre familles comprennent deux analyses linéaires selon des directions orthogonales et deux analyses circulaires de sens inverses l'un de l'autre ;

le dispositif d'analyse en lumière traversante comportant un système informatique (100) programmé pour :

- acquérir, avec le capteur photoélectrique (22) de la caméra polarimétrique (18), au moins une image numérique maîtresse (IM) du récipient (12), ayant un nombre K*N de pixels maîtres (Pm(n)) correspondants à N groupes (26(n)) distincts d'éléments photoélectriques contigus (26(f,n,k)), l'image maîtresse (IM) comprenant N pixels composites (Pc(n)), chaque pixel composite (Pc(n)) correspondant à un des groupes (26(n)) d'éléments photoélectriques contigus, et l'image maîtresse (IM) comprenant le nombre K d'images partielles (IPk) distinctes ayant chacune N pixels partiels (Ppk(n)), les pixels partiels (Ppk(n)) de chaque image partielle correspondant, pour une image partielle (Ipk) donnée, à une seule famille d'éléments photoélectriques (26(f,n,k) du capteur pris dans les N pixels composites (Pc(n)) ;

- calculer informatiquement une image d'intensité (It) dans laquelle la valeur de chaque pixel d'intensité (Pt(n)) est une valeur moyennée de la valeur d'au moins deux pixels partiels (Ppk(n)) extraits du même pixel composite (Pc(n)) et correspondant à deux éléments photoélectriques d'un même groupe (26(n)) mais appartenant à deux familles distinctes d'éléments photoélectriques dont les caractéristiques d'analyse de polarisation sont deux analyses circulaires de sens inverses l'un de l'autre ou deux analyses linéaires d'axes de polarisation orthogonaux ou deux analyses elliptiques orthogonales ;

- calculer informatiquement au moins une image de déphasage (ID) en calculant, pour une série de pixels composites (Pc(n)), un pixel de déphasage (Pd(n)) qui correspond à un pixel composite (Pc(n)) et dont la valeur est représentative d'un déphasage de polarisation ($\varphi$(n)), induit par une contrainte mécanique résiduelle dans la zone élémentaire du récipient correspondant au pixel composite Pc(n), dans la lumière émergente émanant de la zone élémentaire du récipient (Pc(n)) correspondant au pixel composite (Pc(n)), à partir de la valeur d'un ensemble d'un ou plusieurs pixel(s) partiel(s) (Ppk(n)) tous extraits du pixel composite (Pc(n)) et appartenant à une combinaison d'une ou plusieurs images partielles (Ppk(n)), le calcul informatique de chaque pixel de déphasage (Pd(n)) d'une image de déphasage (ID) donnée étant effectué à partir de la même combinaison d'une ou plusieurs images partielles (Ppk(n)).

## Patentansprüche

1. Opto-informatisches Analyseverfahren in Durchlicht eines Behälters (12) aus transparentem oder transluzentem Material wie Glas unter Verwendung einer polarimetrischen Kamera (18), wobei die polarimetrische Kamera einen zweidimensionalen photoelektrischen Sensor (22) umfasst, der photoelektrische Elemente (26(f,n,k)) enthält, wobei jedes photoelektrische Element eine Photozelle (28(f,n,k)) umfasst, vor der ein Polarisationsanalysesystem angeordnet ist, das mindestens einen individuellen Polarisationsanalysator (30(f,n,k)) umfasst, der der Photozelle des jeweiligen photoelektrischen Elements zugeordnet ist,

wobei der photoelektrische Sensor eine Anzahl N von unterschiedlichen Gruppen (26(n)) benachbarter photoelektrischer Elemente umfasst, wobei jede Gruppe benachbarter photoelektrischer Elemente eine Anzahl K von photoelektrischen Elementen (26(f,n,k)) umfasst, die jeweils zu einer von F unterschiedlichen Familien gehören, wobei F ≥ 2, wobei jede Familie von photoelektrischen Elementen durch eine gemeinsame Polarisationsanalysecharakteristik des Polarisationsanalysesystems definiert ist, die für alle ihre photoelektrischen Elemente (26(f,n,k)) gilt, wobei die Polarisationsanalysecharakteristiken der mindestens zwei Familien mindestens zwei lineare Analysen entlang zwei orthogonaler Polarisationsachsen oder mindestens zwei zirkulare Analysen entgegengesetzter Richtungen umfassen, wobei jede Gruppe (26(n)) mindestens zwei photoelektrische Elemente (26(f,n,k)) umfasst, die zu mindestens zwei unterschiedlichen Familien gehören, und wobei jede Gruppe benachbarter photoelektrischer Elemente einem Kompositpixel (Pc(n)) in einem vom Sensor gelieferten Hauptbild (IM) entspricht, wobei das Verfahren Folgendes umfasst:

• Beleuchtung des Behälters von hinten durch eine Beleuchtungsvorrichtung (16), die auf den Behälter einfallendes Licht liefert, das entweder zirkular mit einer ersten Drehrichtung oder linear entlang einer Einfalls-Polarisationsachse polarisiert ist;

• Beobachtung des Behälters (12) von vorne durch die polarimetrische Kamera (18), um auf dem photoelektrischen Sensor (22) der polarimetrischen Kamera austretendes Licht zu erfassen, das vom Behälter ausgeht;

• Erfassung mit dem photoelektrischen Sensor (22) der polarimetrischen Kamera von mindestens einem digitalen Hauptbild (IM) des Behälters mit einer Anzahl von K*N Hauptpixeln (Pm(f,n,k)), die N unterschiedlichen Gruppen benachbarter photoelektrischer Elemente entsprechen, wobei das Hauptbild N Kompositpixel (Pc(n)) umfasst, wobei jedes Kompositpixel einer der Gruppen (26(n)) benachbarter photoelektrischer Elemente entspricht, und wobei das Hauptbild (IM) die Anzahl K unterschiedlicher Teilbilder (IPk) umfasst, die jeweils N Teilpixel (Ppk(n)) enthalten, wobei die Teilpixel (Ppk(n)) jedes Teilbildes für ein gegebenes Teilbild (IPk) einer einzigen Familie von photoelektrischen Elementen des photoelektrischen Sensors (22) entsprechen, die in den N Kompositpixeln (Pc(n)) enthalten sind;

• rechnerische Ermittlung eines Intensitätsbildes (It), in dem der Wert jedes Intensitätspixels (Pt(n)) ein Mittelwert aus dem Wert von mindestens zwei Teilpixeln (Ppk(n)) ist, die zwei photoelektrischen Elementen derselben Gruppe (26(n)) entsprechen, jedoch zu zwei unterschiedlichen Familien von photoelektrischen Elementen (26(f,n,k)) gehören, deren Polarisationsanalysecharakteristiken zwei zirkulare Analysen entgegengesetzter Richtungen oder zwei lineare Analysen orthogonaler Polarisationsachsen oder zwei orthogonale elliptische Analysen sind;

• rechnerische Ermittlung von mindestens einem Phasenverschiebungsbild (ID) durch Berechnung für eine Reihe von Kompositpixeln eines Phasenverschiebungspixels (Pd(n)), das einem Kompositpixel (Pc(n)) entspricht und dessen Wert eine Polarisationsphasenverschiebung ($\varphi$(n)) repräsentiert, die durch eine verbleibende mechanische Spannung in der dem Kompositpixel (Pc(n)) entsprechenden Elementarzone des Behälters (12) in dem vom Behälter austretenden Licht verursacht wird, ausgehend vom Wert einer Menge von einem oder mehreren Teilpixeln (Ppk(n)), die alle aus dem Kompositpixel (Pc(n)) extrahiert sind und zu einer Kombination von einem oder mehreren Teilbildern (IPk) gehören, wobei die rechnerische Ermittlung jedes Phasenverschiebungspixels (Pd(n)) eines gegebenen Phasenverschiebungsbildes (ID) aus derselben Kombination von einem oder mehreren Teilbildern (IPk) erfolgt.

2. Opto-informatisches Analyseverfahren nach Anspruch 1, **dadurch gekennzeichnet, dass**:

• der photoelektrische Sensor (22) mindestens zwei unterschiedliche Familien von photoelektrischen Elementen (26(f,n,k)) umfasst, deren Polarisationsanalysecharakteristiken zwei lineare Analysen entlang einer ersten Polarisationsachse und einer zweiten Polarisationsachse umfassen, die orthogonal zur ersten Polarisationsachse ist;

• das einfallende Licht linear entlang der zweiten Polarisationsachse polarisiert ist;

• die rechnerische Ermittlung jedes Phasenverschiebungspixels (Pd(n)) für ein gegebenes Phasenverschiebungsbild aus dem Wert von mindestens dem Teilpixel (Ppk(n)) erfolgt, das der ersten Polarisationsachse entspricht;

• der Wert jedes Intensitätspixels des Intensitätsbildes ein Mittelwert aus dem Wert von zwei Teilpixeln ist, die aus demselben Kompositpixel extrahiert sind und jeweils einer der beiden Familien zugeordnet sind, deren Polarisationsachsen orthogonal sind, und/oder aus zwei Teilpixeln, die jeweils einer von zwei unterschiedlichen Familien von photoelektrischen Elementen zugeordnet sind, deren Polarisationsanalysecharakteristiken zwei zirkulare Analysen entgegengesetzter Richtungen sind.

3. Opto-informatisches Analyseverfahren nach Anspruch 1, **dadurch gekennzeichnet, dass**:

- der photoelektrische Sensor (22) mindestens vier unterschiedliche Familien von photoelektrischen Elementen (26(f,n,k)) umfasst, deren Polarisationsanalysecharakteristiken mindestens vier lineare Analysen entlang Polarisationsachsen umfassen, die zwei Paare ((A1, A3), (A2, A4)) orthogonaler Polarisationsachsen bilden, wobei die beiden Paare von Polarisationsachsen um 45 Grad gegeneinander versetzt sind;

- das einfallende Licht zirkular in einer Einfallsrichtung polarisiert ist;

- die rechnerische Ermittlung jedes Phasenverschiebungspixels (Pd(n)) für ein gegebenes Phasenverschiebungsbild aus den Werten der vier Teilpixel (Ppk(n)) erfolgt, die aus demselben Kompositpixel (Pc(n)) extrahiert sind und jeweils einer der vier unterschiedlichen Familien von photoelektrischen Elementen zugeordnet sind, deren Polarisationsanalysecharakteristiken die genannten linearen Analysen sind;

- der Wert jedes Intensitätspixels (Pt(n)) des Intensitätsbildes (It) ein Mittelwert aus mindestens zwei Teilpixeln (Ppk(n)) ist, die aus demselben Kompositpixel (Pc(n)) extrahiert sind und jeweils zwei unterschiedlichen Familien von photoelektrischen Elementen zugeordnet sind, deren Polarisationsanalysecharakteristiken zwei lineare Analysen orthogonaler Polarisationsachsen sind.

4. Opto-informatisches Analyseverfahren nach Anspruch 1, **dadurch gekennzeichnet, dass**:

• das einfallende Licht zirkular in einer Einfallsrichtung polarisiert ist;
• der photoelektrische Sensor (22) mindestens eine Familie von photoelektrischen Elementen (26(f,n,k)) umfasst, deren Polarisationsanalysecharakteristik eine zirkulare Analyse entgegengesetzter Richtung zur Einfallsrichtung ist;
• die rechnerische Ermittlung jedes Phasenverschiebungspixels (Pd(n)) für ein gegebenes Phasenverschiebungsbild (ID) aus mindestens dem Wert des Teilpixels (Ppk(n)) erfolgt, das der Familie zugeordnet ist, deren zirkulare Analyse entgegengesetzter Richtung zur Einfallsrichtung ist;
• der Wert jedes Intensitätspixels (Pt(n)) des Intensitätsbildes (It) ein Mittelwert aus zwei Teilpixeln (Ppk(n)) ist, die aus demselben Kompositpixel (Pc(n)) extrahiert sind und jeweils einer von zwei Familien zugeordnet sind, deren zirkulare Analysen entgegengesetzte Richtungen haben, und/oder aus zwei Teilpixeln (Ppk(n)), die jeweils einer von zwei unterschiedlichen Familien von photoelektrischen Elementen zugeordnet sind, deren Polarisationsanalysecharakteristiken zwei lineare Analysen orthogonaler Polarisationsachsen oder zwei orthogonale elliptische Analysen sind.

5. Opto-informatisches Analyseverfahren nach Anspruch 1, **dadurch gekennzeichnet, dass**:

• der photoelektrische Sensor (22) mindestens zwei unterschiedliche Familien von photoelektrischen Elementen (26(f,n,k)) umfasst, deren Polarisationsanalysecharakteristiken zwei zirkulare Analysen entgegengesetzter Richtungen sind;
• das einfallende Licht zirkular polarisiert ist;
• die rechnerische Ermittlung jedes Phasenverschiebungspixels (Pd(n)) für ein gegebenes Phasenverschiebungsbild (ID) aus dem Wert der beiden Teilpixel (Ppk(n)) erfolgt, die aus demselben Kompositpixel (Pc(n)) extrahiert sind und jeweils einer der beiden zirkularen Analysen entgegengesetzter Richtungen entsprechen;
• der Wert jedes Intensitätspixels (Pt(n)) des Intensitätsbildes (It) ein Mittelwert aus zwei Teilpixeln (Ppk(n)) ist, die aus demselben Kompositpixel (Pc(n)) extrahiert sind und jeweils einer der beiden Familien zugeordnet sind, deren zirkulare Analysen entgegengesetzte Richtungen haben, und/oder aus zwei Teilpixeln (Ppk(n)), die jeweils einer von zwei unterschiedlichen Familien von photoelektrischen Elementen zugeordnet sind, deren Polarisationsanalysecharakteristiken zwei lineare Analysen orthogonaler Polarisationsachsen oder zwei orthogonale elliptische Analysen sind.

6. Opto-informatisches Analyseverfahren nach dem vorhergehenden Anspruch, **dadurch gekennzeichnet, dass** der Wert eines Phasenverschiebungspixels (Pd(n)) eine bijektive proportionale Funktion der Polarisationsphasenverschiebung ($\varphi$(n)) für Phasenverschiebungswerte von 0 bis 180 Grad ist.

7. Analyseverfahren nach einem der vorhergehenden Ansprüche, **dadurch gekennzeichnet, dass** es die rechnerische Ermittlung eines Intensitätsbildes umfasst, in dem jedes Intensitätspixel Pt(n) ein Mittelwert aus dem Wert mehrerer unterschiedlicher Paare von Teilpixeln ist, die zu demselben Kompositpixel gehören, wobei jedes unterschiedliche Paar von Teilpixeln einem unterschiedlichen Paar von Polarisationsanalysecharakteristiken entspricht, wobei jedes unterschiedliche Paar von Polarisationsanalysecharakteristiken aus einem oder mehreren Paaren von zwei zirkularen Analysen entgegengesetzter Richtungen, einem oder mehreren Paaren von zwei linearen Analysen orthogonaler Polarisationsachsen und/oder einem oder mehreren Paaren von zwei orthogonalen elliptischen Analysen ausgewählt ist.

8. Analyseverfahren nach einem der vorhergehenden Ansprüche, **dadurch gekennzeichnet, dass** es Folgendes umfasst:

• die rechnerische Erkennung eines bekannten geometrischen Markers des Behälters (12) im Intensitätsbild (It) und die Bestimmung seiner Position im Intensitätsbild; und unter Verwendung der Positionsverknüpfung in ihren jeweiligen Bildern zwischen den Teilpixeln (Ppk(n)), dem Intensitätspixel (Pt(n)), dem Phasenverschiebungspixel (Pd(n)) und dem Kompositpixel (Pc(n)), die miteinander verknüpft sind:

◦ einerseits die rechnerische Bestimmung von mindestens einer Interessenzone im Phasenverschiebungsbild in Abhängigkeit von der Position des geometrischen Markers,
◦ und andererseits die rechnerische Identifizierung des Vorhandenseins einer beanspruchten Zone in der Interessenzone des Phasenverschiebungsbildes.

9. Analyseverfahren nach Anspruch 8, **dadurch gekennzeichnet, dass** die rechnerische Identifizierung des Vorhandenseins einer beanspruchten Zone den Wert der Phasenverschiebungspixel (Pd(n)) und deren relative Position in Bezug auf den geometrischen Marker berücksichtigt.

10. Opto-informatisches Analyseverfahren nach einem der Ansprüche 8 oder 9, **dadurch gekennzeichnet, dass** es die rechnerische Bestimmung der relativen Position der beanspruchten Zone am Behälter in Bezug auf den geometrischen Marker umfasst.

11. Opto-informatisches Analyseverfahren nach einem der Ansprüche 8 bis 10, **dadurch gekennzeichnet, dass** es einen rechnerischen Schritt zur Klassifizierung der beanspruchten Zone umfasst, der die rechnerisch bestimmte relative Position der beanspruchten Zone am Behälter in Bezug auf den geometrischen Marker und eine Größe berücksichtigt, die eine Polarisationsphasenverschiebung ($\varphi(n)$) repräsentiert, die durch eine verbleibende mechanische Spannung in der beanspruchten Zone im austretenden Licht verursacht wird, wobei die Größe, die eine Polarisationsphasenverschiebung ($\varphi(n)$) repräsentiert, rechnerisch aus den Werten der Teilpixel (Ppk(n)) berechnet wird, die der beanspruchten Zone entsprechen.

12. Opto-informatisches Analyseverfahren nach einem der vorhergehenden Ansprüche, **dadurch gekennzeichnet, dass** das einfallende Licht ein Energiespektrum zwischen 250 nm und 1000 nm und eine Breite von weniger als 150 nm, vorzugsweise weniger als 100 nm, aufweist.

13. Opto-informatisches Analyseverfahren nach einem der vorhergehenden Ansprüche, **dadurch gekennzeichnet, dass** jede unterschiedliche Gruppe (26(n)) benachbarter photoelektrischer Elemente (26(f,n,k)) vier photoelektrische Elemente umfasst, die jeweils zu einer von vier unterschiedlichen Familien von photoelektrischen Elementen gehören, wobei die Polarisationsanalysecharakteristiken der vier Familien vier lineare Analysen entlang Polarisationsachsen umfassen, die zwei Paare orthogonaler Polarisationsachsen bilden, wobei die beiden Paare um 45 Grad gegeneinander versetzt sind, in die eine oder andere Richtung, und dass jede unterschiedliche Gruppe von photoelektrischen Elementen ein photoelektrisches Element umfasst, das zu jeder unterschiedlichen Familie gehört.

14. Opto-informatisches Analyseverfahren nach einem der vorhergehenden Ansprüche, **dadurch gekennzeichnet, dass** die Beleuchtungsvorrichtung (16) eine erweiterte Lichtquelle (16a) umfasst, deren Abmessungen senkrecht zu einer Einfallsachse, die sich von der Lichtquelle zum Behälter (12) erstreckt, größer sind als die entsprechenden Abmessungen des zu analysierenden Teils des Behälters.

15. Opto-informatisches Analyseverfahren nach einem der vorhergehenden Ansprüche, **dadurch gekennzeichnet, dass** im Intensitätsbild (It) optische Besonderheiten der Absorption oder Brechung rechnerisch bestimmt werden, um Fehler des Behälters (12) zu erkennen.

16. Opto-informatisches Analyseverfahren nach einem der vorhergehenden Ansprüche, **dadurch gekennzeichnet, dass** in dem Hauptbild (IM) oder dem Intensitätsbild (It) oder dem Phasenverschiebungsbild (ID) rechnerisch Kandidatenpixel oder Kandidatenbereiche erkannt werden, deren Werte außerhalb eines gegebenen Bereichs liegen oder sich von denen benachbarter Pixel oder Bereiche unterscheiden, wobei für jedes Kandidatenpixel oder jeden Kandidatenbereich die Werte der Intensitätspixel (Pt(n)) und die Werte der entsprechenden Phasenverschiebungspixel (Pd(n), $\varphi(n)$) rechnerisch ermittelt werden, und wobei jedes Kandidatenpixel oder jeder Kandidatenbereich rechnerisch als Fehler oder als Nicht-Fehler klassifiziert wird und/oder rechnerisch in Fehler unterschiedlicher Typen wie mindestens eine Blase oder eine Einschluss klassifiziert wird, basierend auf den Werten der Intensitätspixel, den Werten der Polarisationsphasenverschiebung ($\varphi(n)$) und der relativen Position in Bezug auf den geometrischen Marker.

17. Analysevorrichtung in Durchlicht zur Erkennung von Fehlern in einem Behälter aus transparentem oder transluzentem Material wie Glas:

    • umfassend eine Beleuchtungsvorrichtung (16), die auf einen Behälter (12), der an einer Analysestelle (13) der Vorrichtung (10) angeordnet ist, einfallendes Licht liefert, das zirkular mit einer Einfallsdrehrichtung polarisiert ist;
    • umfassend eine polarimetrische Kamera (18), wobei die polarimetrische Kamera einen zweidimensionalen photoelektrischen Sensor (22) umfasst, der photoelektrische Elemente (26(f,n,k)) enthält, wobei jedes photoelektrische Element eine Photozelle (28(f,n,k)) umfasst, vor der ein Polarisationsanalysesystem angeordnet ist, das mindestens einen individuellen Polarisationsanalysator (30(f,n,k)) umfasst, der der Photozelle (28(f,n,k)) des jeweiligen photoelektrischen Elements (26(f,n,k)) zugeordnet ist, wobei der photoelektrische Sensor (22) eine Anzahl N von unterschiedlichen Gruppen (26(n)) benachbarter photoelektrischer Elemente (26(f,n,k)) umfasst, wobei jede unterschiedliche Gruppe benachbarter photoelektrischer Elemente vier photoelektrische Elemente umfasst, die jeweils zu vier unterschiedlichen Familien von photoelektrischen Elementen gehören, wobei jede Familie von photoelektrischen Elementen durch eine Polarisationsanalysecharakteristik des individuellen Polarisationsanalysators (30(f,n,k)) definiert ist, die für alle ihre photoelektrischen Elemente (26(f,n,k)) gilt;

• wobei für jede der mindestens vier Familien die individuellen Polarisationsanalysatoren (30(f,n,k)), die jeder der vier Familien zugeordnet sind, lineare Polarisationsfilter sind, wobei die individuellen Polarisationsfilter (30(f,n,k)), die einer Familie entsprechen, dieselbe Polarisationsachse (A1, A2, A3, A4) haben, wobei die Polarisationsachsen (A1, A2, A3, A4) für die vier Familien unterschiedlich sind und die Polarisationsachsen (A1, A2, A3, A4) der individuellen Polarisationsfilter (30(f,n,k)), die den vier Familien entsprechen, zwei Paare orthogonaler Polarisationsachsen umfassen, wobei die beiden Paare um 45 Grad gegeneinander versetzt sind, in die eine oder andere Richtung; und

• wobei jede unterschiedliche Gruppe von photoelektrischen Elementen ein photoelektrisches Element (26(f,n,k)) umfasst, das zu jeder unterschiedlichen Familie gehört,

**dadurch gekennzeichnet, dass** das Polarisationsanalysesystem eine Viertelwellenplatte (34) des einfallenden Lichts umfasst, die zwischen der Analysestelle (13) und den individuellen Polarisationsfiltern (30(f,n,k)) angeordnet ist und deren schnelle Achse um 45 Grad zur Polarisationsachse der individuellen Polarisationsfilter einer der vier Familien angeordnet ist, sodass die Polarisationscharakteristiken der individuellen Polarisationsfilter (30(f,n,k)) der vier Familien zwei lineare Analysen entlang orthogonaler Richtungen und zwei zirkulare Analysen entgegengesetzter Richtungen umfassen;

wobei die Analysevorrichtung in Durchlicht ein Computersystem (100) umfasst, das programmiert ist, um:

• mit dem photoelektrischen Sensor (22) der polarimetrischen Kamera (18) mindestens ein digitales Hauptbild (IM) des Behälters (12) zu erfassen, das eine Anzahl von K*N Hauptpixeln (Pm(n)) umfasst, die N unterschiedlichen Gruppen (26(n)) benachbarter photoelektrischer Elemente (26(f,n,k)) entsprechen, wobei das Hauptbild (IM) N Kompositpixel (Pc(n)) umfasst, wobei jedes Kompositpixel (Pc(n)) einer der Gruppen (26(n)) benachbarter photoelektrischer Elemente entspricht, und wobei das Hauptbild (IM) die Anzahl K unterschiedlicher Teilbilder (IPk) umfasst, die jeweils N Teilpixel (Ppk(n)) enthalten, wobei die Teilpixel (Ppk(n)) jedes Teilbildes für ein gegebenes Teilbild (IPk) einer einzigen Familie von photoelektrischen Elementen (26(f,n,k)) des Sensors entsprechen, die in den N Kompositpixeln (Pc(n)) enthalten sind;

• rechnerisch ein Intensitätsbild (It) zu ermitteln, in dem der Wert jedes Intensitätspixels (Pt(n)) ein Mittelwert aus dem Wert von mindestens zwei Teilpixeln (Ppk(n)) ist, die aus demselben Kompositpixel (Pc(n)) extrahiert sind und zwei photoelektrischen Elementen derselben Gruppe (26(n)) entsprechen, jedoch zu zwei unterschiedlichen Familien von photoelektrischen Elementen gehören, deren Polarisationsanalysecharakteristiken zwei zirkulare Analysen entgegengesetzter Richtungen oder zwei lineare Analysen orthogonaler Polarisationsachsen oder zwei orthogonale elliptische Analysen sind;

• rechnerisch mindestens ein Phasenverschiebungsbild (ID) zu ermitteln, indem für eine Reihe von Kompositpixeln (Pc(n)) ein Phasenverschiebungspixel (Pd(n)) berechnet wird, das einem Kompositpixel (Pc(n)) entspricht und dessen Wert eine Polarisationsphasenverschiebung ($\varphi$(n)) repräsentiert, die durch eine verbleibende mechanische Spannung in der dem Kompositpixel (Pc(n)) entsprechenden Elementarzone des Behälters im austretenden Licht verursacht wird, ausgehend vom Wert einer Menge von einem oder mehreren Teilpixeln (Ppk(n)), die alle aus dem Kompositpixel (Pc(n)) extrahiert sind und zu einer Kombination von einem oder mehreren Teilbildern (Ppk(n)) gehören, wobei die rechnerische Ermittlung jedes Phasenverschiebungspixels (Pd(n)) eines gegebenen Phasenverschiebungsbildes (ID) aus derselben Kombination von einem oder mehreren Teilbildern (Ppk(n)) erfolgt.

## Claims

1. Optical-computing method for analysis in transmitted light of a container (12) made of transparent or translucent material such as glass using a polarimetric camera (18), the polarimetric camera comprising a two-dimensional photoelectric sensor (22) including photoelectric elements (26(f,n,k)), each photoelectric element comprising a photoelectric cell (28(f,n,k)) in front of which is arranged a polarization analysis system comprising at least one individual polarization analyzer (30(f,n,k)) associated with the photoelectric cell of said photoelectric element,

the photoelectric sensor comprising a number N of distinct groups (26(n)) of contiguous photoelectric elements, each distinct group of contiguous photoelectric elements comprising a number K greater than or equal to two of photoelectric elements (26(f,n,k)) belonging respectively to one among a number F greater than or equal to two of distinct families of photoelectric elements (26(f,n,k)), each family of photoelectric elements being defined by a polarization analysis characteristic of the polarization analysis system common to each of its photoelectric elements (26(f,n,k)), the polarization analysis characteristics of the at least two families comprising at least two linear analyses along two orthogonal polarization axes or at least two circular analyses of opposite directions, each distinct group (26(n)) of photoelectric elements comprising at least two photoelectric elements (26(f,n,k)) belonging to at least two distinct families, and each distinct group of contiguous photoelectric elements corresponding to a composite pixel (Pc(n)) in a master image (IM) delivered by the sensor, the method comprising:

- illuminating the container from the rear by an illumination device (16) delivering, onto the container, incident light polarized either circularly with a first rotation direction or linearly along an incidence polarization axis;
- observing the container (12) from the front by the polarimetric camera (18) so as to collect, on the photoelectric sensor (22) of the polarimetric camera, emerging light emanating from the container;
- acquiring, with the photoelectric sensor (22) of the polarimetric camera, at least one digital master image (IM) of the container, having a number K*N of master pixels (Pm(f,n,k)) corresponding to N distinct groups of contiguous photoelectric elements, the master image comprising N composite pixels (Pc(n)), each composite pixel corresponding to one of the groups (26(n)) of contiguous photoelectric elements, and the master image (IM) comprising the number K of distinct partial images (IPk) each having N partial pixels (Ppk(n)), the partial pixels (Ppk(n)) of each partial image corresponding, for a given partial image (IPk), to a single family of photoelectric elements of the photoelectric sensor (22) taken in the N composite pixels (Pc(n));
- computing an intensity image (It) in which the value of each intensity pixel (Pt(n)) is an averaged value of the value of at least two partial pixels (Ppk(n)) corresponding to two photoelectric elements of the same group (26(n)) but belonging to two distinct families of photoelectric elements (26(f,n,k)) whose polarization analysis characteristics are two circular analyses of opposite directions or two linear analyses of orthogonal polarization axes or two orthogonal elliptical analyses;
- computing at least one phase-shift image (ID) by calculating, for a serie of composite pixels, a phase-shift pixel (Pd(n)) which corresponds to a composite pixel (Pc(n)) and whose value is representative of a polarization phase shift ($\varphi$(n)) induced, by a residual mechanical stress in the elementary zone of the container (12) corresponding to the composite pixel (Pc(n)), in the emerging light emanating from the elementary zone of the container corresponding to the composite pixel (Pc(n)), from the value of a set of one or more partial pixel(s) (Ppk(n)) all extracted from the composite pixel (Pc(n)) and belonging to a combination of one or more partial images (IPk), the computation of each phase-shift pixel (Pd(n)) of a given phase-shift image (ID) being carried out from the same combination of one or more partial images (IPk).

2. Optical-computing analysis method according to claim 1, **characterized in that**:

- the photoelectric sensor (22) comprises at least two distinct families of photoelectric elements (26(f,n,k)) whose polarization analysis characteristics are two linear analyses respectively along a first polarization axis and a second polarization axis orthogonal to the first polarization axis;
- the incident light is linearly polarized along the second polarization axis;
- the computation of each phase-shift pixel (Pd(n)) for a given phase-shift image is carried out from the value of at least the partial pixel (Ppk(n)) corresponding to the first polarization axis;
- the value of each intensity pixel of the intensity image is an averaged value of the value of two partial pixels extracted from the same composite pixel and each associated with one of the two families whose polarization axes are orthogonal and/or of two partial pixels each associated with one of two distinct families of photoelectric elements whose polarization analysis characteristics are two circular analyses of opposite directions.

3. Optical-computing analysis method according to claim 1, **characterized in that**:

- the photoelectric sensor (22) comprises at least four distinct families of photoelectric elements (26(f,n,k)) whose polarization analysis characteristics comprise at least four linear analyses along polarization axes comprising two pairs ((A1, A3), (A2, A4)) of orthogonal polarization axes, the two pairs of polarization axes being offset from each other by an angle of 45 degrees;
- the incident light is circularly polarized in one incidence direction;
- the computation of each phase-shift pixel (Pd(n)) for a given phase-shift image is carried out from the values of the four partial pixels (Ppk(n)) extracted from the same composite pixel (Pc(n)) and each associated with one of four distinct families of photoelectric elements whose polarization analysis characteristics are said linear analyses;

• the value of each intensity pixel (Pt(n)) of the intensity image (It) is an averaged value of at least two partial pixels (Ppk(n)) extracted from the same composite pixel (Pc(n)) and each associated with two distinct families of photoelectric elements whose polarization analysis characteristics are two linear analyses of orthogonal polarization axes.

4. Optical-computing analysis method according to claim 1, **characterized in that**:

• the incident light is circularly polarized in one incidence direction;
• the photoelectric sensor (22) comprises at least one family of photoelectric elements (26(f,n,k)) whose polarization analysis characteristic is a circular analysis of direction opposite to the incidence direction;
• the computation of each phase-shift pixel (Pd(n)) for a given phase-shift image (ID) is carried out from at least the value of the partial pixel (Ppk(n)) associated with the family whose circular analysis is of direction opposite to the incidence direction;
• the value of each intensity pixel (Pt(n)) of the intensity image (It) is an averaged value of two partial pixels (Ppk(n)) extracted from the same composite pixel (Pc(n)) and each associated with one of two families whose circular analyses are of opposite directions and/or of two partial pixels (Ppk(n)) each associated with one of two distinct families of photoelectric elements whose polarization analysis characteristics are two linear analyses of orthogonal polarization axes or two orthogonal elliptical analyses.

5. Optical-computing analysis method according to claim 1, **characterized in that**:

• the photoelectric sensor (22) comprises at least two distinct families of photoelectric elements (26(f,n,k)) whose polarization analysis characteristics are two circular analyses of opposite directions;
• the incident light is circularly polarized;
• the computation of each phase-shift pixel (Pd(n)) for a given phase-shift image (ID) is carried out from the value of the two partial pixels (Ppk(n)) extracted from the same composite pixel (Pc(n)) and each corresponding to one of the two circular analyses of opposite directions;
• the value of each intensity pixel (Pt(n)) of the intensity image (It) is an averaged value of two partial pixels (Ppk(n)) extracted from the same composite pixel (Pc(n)) and each associated with one of the two families whose circular analyses are opposite to each other and/or of two partial pixels (Ppk(n)) extracted from the same composite pixel (Pc(n)) and each associated with one of two distinct families of photoelectric elements whose polarization analysis characteristics are two linear analyses of orthogonal polarization axes or two orthogonal elliptical analyses.

6. Optical-computing analysis method according to the preceding claim, **characterized in that** the value of a phase-shift pixel (Pd(n)) is a bijective proportional function of the polarization phase shift ($\varphi$(n)) for phase-shift values ranging from 0 to 180 degrees.

7. Analysis method according to any one of the preceding claims, **characterized in that** it comprises computing an intensity image in which each intensity pixel Pt(n) is an averaged value of the value of several distinct pairs of partial pixels belonging to the same composite pixel, each distinct pair of partial pixels corresponding to a distinct pair of polarization analysis characteristics, each distinct pair of polarization analysis characteristics being chosen among one or more pairs of two circular analyses of opposite directions, one or more pairs of two linear analyses of orthogonal polarization axes, and/or one or more pairs of two orthogonal elliptical analyses.

8. Analysis method according to any one of the preceding claims, **characterized in that** it comprises:

• computer recognition, in the intensity image (It), of a known geometric marker of the container (12) and determination of its location in the intensity image; and, using the location link, in their respective images, between the partial pixels (Ppk(n)), the intensity pixel (Pt(n)), the phase-shift pixel (Pd(n)) and the composite pixel (Pc(n)) associated:

    ◦ on the one hand, computer determination of at least one region of interest in the phase-shift image based on the location of the geometric marker,
    ◦ and on the other hand, computer identification of the presence of a stressed region in the region of interest of the phase-shift image.

9. Analysis method according to claim 8, **characterized in that** the computer identification of the presence of a stressed region takes into account the value of the phase-shift pixels (Pd(n)) and their relative location with respect to the geometric marker.

10. Optical-computing analysis method according to one of claims 8 or 9, **characterized in that** it comprises computer-based determination of the relative location of the stressed region on the container with respect to the geometric marker.

11. Optical-computing analysis method according to one of claims 8 to 10, **characterized in that** it comprises a computer-based step of classification of the stressed region which takes into account the relative location of the stressed region on the container with respect to the geometric marker, determined by computer, and a magnitude representative of a polarization phase shift ($\varphi$(n)), induced by a residual mechanical stress in the stressed region, in the emerging light emanating from the stressed region, the magnitude representative of a polarization phase shift ($\varphi$(n)) being computed by computer from the values of the partial pixels (Ppk(n)) corresponding to the stressed region.

12. Optical-computing analysis method according to any one of the preceding claims, **characterized in that** the incident light has an energy spectrum between 250 nm and 1000 nm and a width less than 150 nm, preferably a width less than 100 nm.

13. Optical-computing analysis method according to any one of the preceding claims, **characterized in that** each distinct group (26(n)) of contiguous photoelectric elements (26(f,n,k)) comprises four photoelectric elements belonging respectively to one among four distinct families of photoelectric elements, the polarization analysis characteristics of the four families comprising four linear analyses along polarization axes comprising two pairs of orthogonal polarization axes, the two pairs being offset from each other by an angle of 45 degrees, in one direction or the other, and **in that** each distinct group of photoelectric elements comprises one photoelectric element belonging to each distinct family.

14. Optical-computing analysis method according to any one of the preceding claims, **characterized in that** the illumination device (16) comprises an extended light source (16a) whose dimensions, perpendicular to an incidence axis extending from the light source to the container (12), are greater than the corresponding dimensions of the part of the container to be analyzed.

15. Optical-computing analysis method according to any one of the preceding claims, **characterized in that** optical absorption or refraction features are determined by computer in the intensity image (It) to detect defects of the container (12).

16. Optical-computing analysis method according to any one of the preceding claims, **characterized in that** candidate pixels or candidate regions are detected by computer in the master image (IM) or the intensity image (It) or the phase-shift image (ID), whose values are outside a given range or different from those of neighboring pixels or regions, the values of the intensity pixels (Pt(n)) and the values of the corresponding phase-shift pixels (Pd(n), $\varphi$(n)) are computed for each candidate pixel or candidate region, and each candidate pixel or candidate region is classified by computer as a defect or as a non-defect and/or classified by computer into defects of different types among at least a blister or an inclusion, based on the values of the intensity pixels, the values of the polarization phase shift ($\varphi$(n)) and the relative location with respect to the geometric marker.

17. Device for analysis in transmitted light of defects in a container made of transparent or translucent material such as glass:

   • comprising an illumination device (16) delivering, onto a container (12) placed at an analysis location (13) of the device (10), incident light circularly polarized with an incidence rotation direction;
   • comprising a polarimetric camera (18), the polarimetric camera comprising a two-dimensional photoelectric sensor (22) including photoelectric elements (26(f,n,k)), each photoelectric element comprising a photoelectric cell (28(f,n,k)) in front of which is arranged a polarization analysis system comprising at least one individual polarization analyzer (30(f,n,k)) associated with the photoelectric cell (28(f,n,k)) of said photoelectric element (26(f,n,k)), the photoelectric sensor (22) comprising a number N of distinct groups (26(n)) of contiguous photoelectric elements (26(f,n,k)), each distinct group of contiguous photoelectric elements comprising four photoelectric elements belonging respectively to four distinct families of photoelectric elements, each family of photoelectric elements being defined by a polarization analysis characteristic of the individual polarization analyzer (30(f,n,k)) which is common to each of its photoelectric elements (26(f,n,k));

• for each of the at least 4 families, the individual polarization analyzers (30(f,n,k)) associated with each of the four families are linear polarizing filters, the individual polarizing filters (30(f,n,k)) corresponding to a family having the same polarization axis (A1, A2, A3, A4), the polarization axes (A1, A2, A3, A4) being distinct for the 4 families and the polarization axes (A1, A2, A3, A4) of the individual polarizing filters (30(f,n,k)) corresponding to the 4 families comprising two pairs of orthogonal polarization axes, the two pairs being offset from each other by an angle of 45 degrees, in one direction or the other; and

• each distinct group of photoelectric elements comprising one photoelectric element (26(f,n,k)) belonging to each distinct family,

**characterized in that** the polarization analysis system comprises a quarter-wave plate (34) of the incident light, which is interposed between the analysis location (13) and the individual polarizing filters (30(f,n,k)), and whose fast axis is arranged at an angle of 45 degrees to the polarization axis of the individual polarizing filters of one of the four families, so that the polarization characteristics of the individual polarizing filters (30(f,n,k)) of the four families comprise two linear analyses along orthogonal directions and two circular analyses of opposite directions;

the transmitted-light analysis device comprising a computer system (100) programmed to:

• acquire, with the photoelectric sensor (22) of the polarimetric camera (18), at least one digital master image (IM) of the container (12), having a number K*N of master pixels (Pm(n)) corresponding to N distinct groups (26(n)) of contiguous photoelectric elements (26(f,n,k)), the master image (IM) comprising N composite pixels (Pc(n)), each composite pixel (Pc(n)) corresponding to one of the groups (26(n)) of contiguous photoelectric elements, and the master image (IM) comprising the number K of distinct partial images (IPk) each having N partial pixels (Ppk(n)), the partial pixels (Ppk(n)) of each partial image corresponding, for a given partial image (IPk), to a single family of photoelectric elements (26(f,n,k)) of the sensor taken in the N composite pixels (Pc(n));

• compute an intensity image (It) in which the value of each intensity pixel (Pt(n)) is an averaged value of the value of at least two partial pixels (Ppk(n)) extracted from the same composite pixel (Pc(n)) and corresponding to two photoelectric elements of the same group (26(n)) but belonging to two distinct families of photoelectric elements whose polarization analysis characteristics are two circular analyses of opposite directions or two linear analyses of orthogonal polarization axes or two orthogonal elliptical analyses;

• compute at least one phase-shift image (ID) by calculating, for a serie of composite pixels (Pc(n)), a phase-shift pixel (Pd(n)) which corresponds to a composite pixel (Pc(n)) and whose value is representative of a polarization phase shift ($\varphi$(n)), induced by a residual mechanical stress in the elementary zone of the container corresponding to the composite pixel Pc(n), in the emerging light emanating from the elementary zone of the container (Pc(n)) corresponding to the composite pixel (Pc(n)), from the value of a set of one or more partial pixel(s) (Ppk(n)) all extracted from the composite pixel (Pc(n)) and belonging to a combination of one or more partial images (Ppk(n)), the computation of each phase-shift pixel (Pd(n)) of a given phase-shift image (ID) being carried out from the same combination of one or more partial images (Ppk(n)).

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

**RÉFÉRENCES CITÉES DANS LA DESCRIPTION**

**Documents brevets cités dans la description**

- EP 2275790 A

- WO 2020212014 A